# EUROPEAN PATENT SPECIFICATION

(11) **EP 4 534 274 B1**
(45) Date of publication and mention of the grant of the patent: **02.12.2026**
(21) Application number: 23201535.4
(22) Date of filing: 04.10.2023
(51) Int. Cl.: B29C 64/106, H01F 41/02, H01F 7/20, H01F 7/02, B33Y 70/10, B33Y 30/00, B33Y 10/00, B29C 64/30, B29C 64/241, B29C 64/20, B29C 64/124, B22F 10/12, B33Y 40/20, B22F 12/00

(54) **A MAGNETIC DEVICE CONFIGURED TO BE INSTALLED ON ADDITIVE MANUFACTURING APPARATUSES, ENABLING MAGNETICALLY-ASSISTED 3D PRINTING OF COMPOSITE ELEMENTS**
MAGNETISCHE VORRICHTUNG ZUR INSTALLATION AUF VORRICHTUNGEN ZUR GENERATIVEN FERTIGUNG MIT MAGNETUNTERSTÜTZTEM 3D-DRUCKEN VON VERBUNDELEMENTEN
DISPOSITIF MAGNÉTIQUE CONÇU POUR ÊTRE INSTALLÉ SUR DES APPAREILS DE FABRICATION ADDITIVE, PERMETTANT UNE IMPRESSION 3D ASSISTÉE MAGNÉTIQUEMENT D'ÉLÉMENTS COMPOSITES

(43) Date of publication of application: 09.04.2025
(73) Proprietor: Commissariat à l'Energie Atomique et aux Energies Alternatives, 75015 Paris (FR); Centre National de la Recherche Scientifique, 75016 Paris (FR); Ecole Polytechnique, 91128 Palaiseau Cedex (FR)
(72) Inventor: Rizza, Giancarlo, 91128 Palaiseau Cedex (FR); Cosola, Andrea, 91128 Palaiseau Cedex (FR)
(74) Representative: Cabinet Camus Lebkiri

(56) References cited:
- EP-A1- 3 711 949
- CN-A- 116 039 079
- US-A1- 2022 355 540

## Description

### TECHNICAL FIELD

The technical field of the invention is the magnetic field-assisted three-dimensional printing.

The present invention concerns a magnetic device configured to generate an adjustable homogeneous magnetic field, the installation of the magnetic device on a three-dimensional printer apparatus and a method for manufacturing a composite part assisted by the adjustable homogeneous magnetic field generated by the magnetic device installed on a three-dimensional printer apparatus.

### BACKGROUND OF THE INVENTION

Additive manufacturing, also named three-dimensional (3D) printing, refers to a wide range of technologies that allow to convert computer aided design models into 3D-structures with a resolution down to hundreds of nanometers. As 3D printing technology allows to obtain complex architectures otherwise not feasible with conventional manufacturing processes, it is playing a significant role in reinventing traditional manufacturing industry.

Among the large bunch of 3D printable materials, polymers are by far the most employed ones. However, the use of polymers for industrial applications is still limited because of poor mechanical and/or functional properties of the printed elements. The functional properties of a material pertain to its capacity to interact with the environment, responding to various stimuli such as optical, electrical, thermal, and magnetic actuation. Thus, the combination of additive manufacturing with multi-responsive materials allows to create stimuli-active constructs.

In addition to these promising classes of smart materials, an ever-increasing attention is being given to the synergetic incorporation of fillers e.g., micro and nanoparticles, fibers, whiskers, flakes, rods, and wires within a printable matrix so as to process polymeric composite materials. This approach allows to expand the relationship between form and properties and offers an attractive strategy to generate objects with functional and/or reinforced properties.

Presently, the production of polymer composites using 3D printing primarily relies on extrusion-based techniques (such as fused deposition modelling, called FDM, direct ink writing, called DIW) as well as vat polymerization processes (including stereolithography, called SLA, digital light processing, called DLP, and two photons polymerization, called 2PP). These methods involve the utilization of thermoplastic filaments or liquid resins as precursor polymeric materials.

Potential applications of 3D printed composite materials are further expanded if the embedded fillers can be manipulated, assembled, or patterned during the printing process, so as to induce well-ordered and/or anisotropic structures. The main interest in printing objects with embedded organized and oriented structures is generally related to the possibility to obtain materials with superior mechanical and/or enhanced functional properties. However, the precise spatial control and the arrangement of embedded fillers within a material during the printing process poses significant challenges, making this topic research area largely unexplored in both academic and industrial domains. Specifically, the manipulation, self-assembly and spatial orientation of magneto-responsive fillers under the application of an external magnetic field, is an intriguing and underdeveloped field of study.

Hereafter, magneto-responsive fillers refer to several categories of micro and nanostructures composed by mono-elemental hard or soft magnetic particles of different morphology e.g., spherical, nanorods, nanowires and others, and multi-elemental particles containing or not non-magnetic elements, e.g., core-shell, or non-magnetic micro and nanostructures decorated with soft or hard magneto-responsive fillers in all the morphological configurations described above.

So far, various schemes have been designed for an accurate control of the magnetic field. They be categorized into two distinct systems, each comprizing two subcategories.
i)The first system is composed by permanent magnets. a) The simplest configuration uses single permanent magnets to generate a magnetic field, which is homogeneous only close to the surface of the magnet owing to the field gradient. However, this configuration is inexpensive and has the highest compactness. b) A second configuration uses multiple permanent magnets in various arrangements.
ii)The second system is composed of electromagnets or coils. a) The first configuration, also known as Helmholtz coil, consists of a pair of circular coils with a common axis and equal radii, carrying an equal electric current in the same direction. This system allows manufacturing a nearly uniform magnetic field in a region halfway from the two coils. Multiaxial Helmholtz coils are composed of several Helmholtz coils where the axis of each pair is mutually perpendicular to the others. The use of a Helmholtz coil or multiaxial Helmholtz coils necessitates some set up space. b) To mitigate layout restrictions, a second configuration is composed by distributed electromagnets having both in and off-plan positioning and pointing toward the workspace.

In reference to the existing literature, Kokkinis et al., Nat. Commun. 6, 8643 (2015), reports the 3D printing of bio-inspired magnetic composites by exploiting a rotating neodymium magnet to induce the alignment of magneto-responsive fillers. However, such system is susceptible to field gradients, depending on the distance of the magnet from the printing region.

Kim et al., Nature 558, 274-279 (2018), describes a modified Direct Ink Writing process which exploits the magnetic field generated by either a permanent magnet or an electromagnetic coil placed around the dispensing nozzle to align ferromagnetic domains in 3D-printed soft materials, but only along or in reverse to the extrusion direction, with no control onto other possible directions of alignment. The patent application US2017/0136699A1 discloses a magnetic field-assisted stereolithography (SLA) apparatus that enables the manufacture of reinforced composites with a complete control over the spatial direction of the magnetic particles but requires a large-sized and power consuming set-up composed of multiple solenoids, which is also poorly adaptable to other existing additive manufacturing machines.

The patent application EP3711949A1 provides an extrusion-based 3D printer apparatus equipped with a magnetic system comprising a plurality of coils and/or permanent magnets for manufacturing magnetically oriented composite materials. However, such magnetic system is poorly adaptable to vat technologies.

CN 116 039 079 A discloses a 3D printing device for manufacturing a magnetic three-dimensional structure, including an XY direction moving direct writing filling system, a printing platform, a Z direction lifting DLP light curing device, a magnetic field generating device, a calibration system, a carrier board and a control device.

Hence, there is an inherent need for a device allowing the production of a homogeneous magnetic field that can be easily and effectively controlled throughout the printing process, thereby overcoming the limitations of existing solutions. This device should possess the flexibility to adapt to diverse additive manufacturing machines, ensuring seamless compatibility across various printing platforms.

### SUMMARY OF THE INVENTION

The aim of the invention is to provide a magnetic device for generating a magnetic field whose properties can be adjusted to improve the magnetically-assisted 3D printing of composite materials.

To this end, according to an aspect of the invention, it is provided a magnetic device configured to generate a homogeneous magnetic field B̅ in a specific zone, the magnetic field B̅ having spatial components Bₓ, B_{y} and B_{z} along respectively X, Y and Z axes of a Cartesian reference frame, said magnetic field B̅ being adjustable in intensity ∥B̅∥ and three-dimensional spatial direction, the magnetic device is adapted to be installed on additive manufacturing apparatuses enabling a magnetically-assisted three-dimensional printing of composite elements, the magnetic device comprising:
∘ an inner and an outer nested concentric Halbach cylinder arrays sharing a common revolution axis oriented along the Z-axis, each of said inner and outer Halbach cylinder arrays generating a homogeneous magnetic field with an equal intensity B₀, the inner and outer Halbach cylinder arrays allow generating a resulting magnetic field B̅_̅{̅x̅,̅y̅}̅ (α, β) in the XY-plane with spatial components Bₓ and B_{y}, the inner and outer Halbach cylinder arrays being mounted to rotate jointly or in opposite angular directions around their common revolution axis in order to achieve adjustability of both intensity and spatial direction of the resulting magnetic field B̅_̅{̅x̅,̅y̅}̅ (α, β) in the XY-plane;
∘ a solenoid (113) positioned within a core of the inner Halbach cylinder array (111), and having a revolution axis aligned with the common revolution axis of the inner and outer Halbach cylinder arrays, the solenoid generating and adjusting a magnetic field B̅_̅{̅z̅}̅ of spatial component B_{z} along the Z-axis,
the specific zone being located in a core of the solenoid wherein the homogeneous magnetic field B is applied.

Thanks to the invention, it is possible to generate a magnetic field that is both homogeneous and whose intensity and three-dimensional spatial direction can be easily adjustable in a specific zone located in a core of the magnetic device, thanks to both the rotation of two nested Halbach cylinder arrays (inner and outer) and the modulation of the current injected in a solenoid.

Also, the magnetic device according to the invention is quite inexpensive and sufficiently compact and flexible to be potentially adaptable to almost all types of resin-based three-dimensional printer apparatuses, i.e., DLP, 2PP and DIW.

Apart from the characteristics mentioned above in the previous paragraph, the magnetic device according to an aspect of the invention may have one or several complementary characteristics among the following characteristics considered individually or in any technically possible combinations.

According to a variant, the inner Halbach cylinder array is configured to generate a magnetic field having a spatial direction in the XY-plane and the outer Halbach cylinder array is configured to generate a magnetic field having a spatial direction in the XY-plane, the magnetic device being such that:
- the inner Halbach cylinder array is arranged to be rotated anticlockwise around its revolution axis in order to rotate the direction of its magnetic field by an angle - α from the Y-axis, and
- the outer Halbach cylinder array is arranged to be rotated clockwise around its revolution axis in order to rotate the direction of its magnetic field by an angle α from the Y-axis, α being comprised between 0° and 90°
   in order to adjust the intensity ∥B̅_̅{̅x̅,̅y̅}̅(α, β)∥,
   the maximum intensity of the resulting magnetic field ∥B̅_̅{̅x̅,̅y̅}̅(α, β)∥ is obtained for α equal to 0° and corresponds to 2B₀, i.e. when the directions of the magnetic fields generated by the inner and outer Halbach cylinder arrays are collinear and parallel,
   and the minimum intensity of ∥B̅_̅{̅x̅,̅y̅}̅(α, β)∥ is obtained for α equal to 90° and is equal to 0 T, i.e. when the directions of the magnetic fields generated by the inner and outer Halbach cylinder arrays are collinear and antiparallel.

As the intensities of the magnetic field generated by each Halbach cylinder array are equal, the relative rotation of the inner and outer Halbach cylinder arrays in anticlockwise and clockwise directions, respectively, can be used to adjust the intensity ∥B̅_̅{̅x̅,̅y̅}̅∥ of the resulting magnetic field B̅_̅{̅x̅,̅y̅}̅ in the XY-plane. For instance, if the fields associated to the two Halbach cylinder arrays are colinear and parallel, the resulting intensity of B̅_̅{̅x̅,̅y̅}̅ is equal to ∥B̅_̅{̅x̅,̅y̅}̅∥ = 2B₀; on the contrary, if the two fields are collinear but antiparallel, the resulting intensity of B̅_̅{̅x̅,̅y̅}̅ is equal to ∥B̅_̅{̅x̅,̅y̅}̅∥ = 0 T. Between these two extreme cases, all the intermediate intensities, the resulting intensity ∥B̅_̅{̅x̅,̅y̅}̅∥ being comprised in the interval [0, 2B₀], can be obtained by enabling the relative rotation of the inner and outer Halbach arrays in anticlockwise and clockwise directions respectively, by an angle (alpha, α) ranging from 0° to 90°. According to a variant, the inner and outer Halbach cylinder arrays are arranged to be jointly rotated around their common revolution axis, such that the direction of B̅_̅{̅x̅,̅y̅}̅(α, β) is rotated of an angle β from the Y-axis comprised in the range 0° to 360°. Advantageously, once the desired intensity of the resulting magnetic field B̅_̅{̅x̅,̅y̅}̅ is obtained, the simultaneous rotation of the two Halbach arrays (inner and outer) by the same angle (beta, β) is used to control the spatial direction of the resulting magnetic field B̅_̅{̅x̅,̅y̅}̅ in the XY-plane. As the intensity of B̅_̅{̅x̅,̅y̅}̅ depends on the angle α and its spatial direction in the XY-plane on the angle β, the resulting magnetic field B̅_̅{̅x̅,̅y̅}̅ is expressed as B̅_̅{̅x̅,̅y̅}̅(α, β).

According to a variant, a diameter of a core of the solenoid is comprised between 1 mm and 500 mm. Advantageously, the diameter of the core of the solenoid, as well as that of the nested Halbach cylinder arrays, can be conveniently sized to adapt the magnetic device to the different three-dimensional printing apparatuses (DLP, DIW, 2PP) as well as to the corresponding technical applications.

According to another aspect of the invention, it is provided a three-dimensional printer apparatus for manufacturing a composite part assisted by a homogeneous magnetic field B̅, the three-dimensional printer apparatus comprising:
- the magnetic device according to the invention, the magnetic device generating the magnetic field B̅ adjustable in both intensity and three-dimensional spatial direction;
- a deposition zone adapted to receive a precursor material; the deposition zone being located in the XY-plane of the Cartesian reference frame within the specific zone located in the core of the solenoid wherein the homogeneous magnetic field B̅ is applied.

Advantageously, the magnetic device can be suitably integrated into different three-dimensional printer apparatuses, i.e., DLP, DIW and 2PP, to magnetically assist the self-assembly and the orientation of magneto-responsive fillers within polymeric resins during the manufacturing of a composite part. In particular, the use of the magnetic device according to the invention allows the fabrication of polymer composites possessing tailor-made magnetic and/or reinforced properties through the remote manipulation of magneto-responsive fillers dispersed within a precursor resin. Specifically, when soft magnetic fillers or fibers are used, the application of a magnetic field leads to the creation of spatially oriented chain-like structures. Conversely, if the resin contains hard magnetic fillers, the application of a magnetic field causes the alignment of the magnetic dipole along the direction of the field. In both scenarios, the precursor material acquires a magnetic anisotropy, which can be frozen-out by curing the resin. The level of control associated to the magnetic device according to the invention allows for the fabrication of magneto-responsive composite components possessing advanced functional and/or reinforced properties with a superior degree of precision compared to already proposed solutions. The printed elements (as composites) are then suitable, for example but not limited to, for mechanical, optical, electrical, thermal, medical and magnetic applications.

Apart from the characteristics mentioned above in the previous paragraph, the three-dimensional printer apparatus according to an aspect of the invention may have one or several complementary characteristics among the following characteristics considered individually or in any technically possible combinations.

According to a variant, the three-dimensional printer apparatus includes a support platform comprising a first stepper motor and a second stepper motor, such that a rotation of the inner and outer Halbach cylinder arrays are controlled by the first and second motor, respectively. Advantageously, the inner and outer Halbach cylinder arrays can rotate freely and independently from each other in order to tune the intensity and the spatial direction of the generated magnetic field B̅_̅{̅x̅,̅y̅}̅(α, β) in the XY-plane.

According to a variant, the deposition zone is a vat, a microscope slide or a building platform. It is advantageous to utilize as deposition zones a vat for the digital light processing (DLP) technique, a building platform for the direct ink writing (DIW) method, and a microscope slide for the two photons polymerization (2PP) process. This versatility enables the magnetic device to be utilized and adjusted for various types of three-dimensional printing apparatuses.

According to a variant, the three-dimensional printer apparatus comprises a precursor material disposed within the deposition zone.

The precursor material is poured into a vat, for the DLP, and on a microscope slide, for the 2PP, before the initiation of printing step. Conversely, the precursor material is deposited on a building platform for a DIW printer apparatus during the printing step.

According to a variant, the three-dimensional printer apparatus comprises a radiation source configured to apply a radiation on the precursor material disposed within the deposition zone.

According to a variant, the three-dimensional printer apparatus is a digital light processing apparatus, a direct-ink-writing apparatus or a two-photon polymerization apparatus.

According to a variant, the three-dimensional printer apparatus is a digital light processing apparatus and the radiation is applied on the support platform from below the magnetic device.

According to a variant, the precursor material comprises a polymeric resin embedding magneto-responsive fillers.

According to another aspect of the invention, it is provided a method for manufacturing a composite part assisted by homogeneous magnetic field defined along X, Y and Z axes of a Cartesian reference frame and adjustable in intensity and three-dimensional spatial direction, the magnetic field being generated by a magnetic device comprising an inner and an outer nested concentric Halbach cylinder arrays sharing a common revolution axis aligned along the Z-axis, each of said inner and outer Halbach cylinder arrays generating a homogeneous magnetic field of equal intensity B₀, both the inner and outer Halbach cylinder arrays being mounted to rotate jointly or in opposite angular directions around their common revolution axis, the magnetic device also comprising a solenoid inserted in a core of the inner Halbach cylinder array and having a revolution axis aligned along the common revolution axis of the inner and outer Halbach cylinder array, the solenoid generating and tuning a magnetic field B̅_̅{̅z̅}̅ of spatial component B_{z} along the Z-axis, the magnetic field generated by the magnetic device being applied to a specific zone located inside the core of the solenoid, the method comprising:
(a) feeding a deposition zone with a precursor material comprising a photocurable resin and magneto-responsive fillers, the deposition zone being disposed in the XY-plane within the specific zone located in the core of the magnetic device,
(b) generating (202) a homogeneous magnetic field B̅ within the deposition zone (121) by the magnetic device, B̅ comprising spatial components Bₓ, B_{y} and B_{z} along respectively the X, Y and Z-axes and having a desired intensity ∥B̅∥ and a desired three-dimensional spatial direction, the generation of B̅ comprising the generation of a homogeneous magnetic field B̅_̅{̅x̅,̅y̅}̅(α, β) of spatial components Bₓ and B_{y} and of adjustable intensity ∥B̅_̅{̅x̅,̅y̅}̅(α, β)∥ and spatial direction in the XY-plane, the generation of B̅_̅{̅x̅,̅y̅}̅ comprising :
   ∘ rotating the outer Halbach cylinder array cylinder around its revolution axis of an angle α from the Y-axis,
   ∘ rotating the inner Halbach cylinder around its revolution axis of an angle - α from the Y-axis,
   ∘ rotating jointly the inner and outer Halbach cylinder arrays around their same revolution axis of an angle β from the Y-axis to rotate the direction of B̅_̅{̅x̅,̅y̅}̅(α, β) of the angle β from the Y-axis, such that the spatial direction of B̅_̅{̅x̅,̅y̅}̅(α, β) in the XY-plane is the desired spatial direction,
   the generation of B̅ also comprising the generation of a homogeneous magnetic field B̅_̅{̅z̅}̅ of spatial component B_{z} along the Z-axis, the generation of B̅_̅{̅z̅}̅ comprising:
   o injecting an adjustable electric current into the solenoid, such that the spatial direction of the magnetic field B̅ with respect to the XY-plane is given by an azimuthal angle Ψ and the desired intensity ∥B̅∥ is equal to $\sqrt{{\left‖\vec{{B}_{x , y}}\left(α, β\right)\right‖}^{2} + {\left‖\vec{{B}_{z}}\left(Ψ\right)\right‖}^{2}}$*,*
(c) orienting the magneto-responsive fillers in a first alignment with the first magnetic field B̅;
(d) consolidating the precursor material with the magneto-responsive fillers held in the first alignment.

Advantageously, the method according to the invention allows to manufacture a composite part using the magnetic device to orient the magneto-responsive fillers as desired by an operator for example. The operator does not intervene manually to generate the desired magnetic field and only gives few inputs as parameters related to the desired intensity and three-dimensional spatial direction, and the three-dimensional printer apparatus control the magnetic device in order to generate a magnetic field having the desired intensity and spatial direction.

Apart from the characteristics mentioned above in the previous paragraph, the method according to an aspect of the invention may have one or several complementary characteristics among the following characteristics considered individually or in any technically possible combination.

According to a variant:
- If the composite part is fabricated, the method comprises: (e) post-processing the composite part,
- Otherwise, the method comprises: (f) repeating steps (a) to (d) until the composite part is obtained.

According to a variant, each consolidating step is realized with a radiation source. According to a variant, in step (d), the precursor material is partially or fully cured.

The invention and its various applications will be better understood by reading the following description and examining the accompanying Figures.

### BRIEF DESCRIPTION OF THE FIGURES

The Figures are presented for information purposes only and in no way limit the invention.
- Figure 1 is an illustration of a magnetic device according to the invention mounted on a digital light processing apparatus for manufacturing a composite part according to an aspect of the invention.
- Figure 2 is an illustration of the magnetic device according to the invention.
- Figure 3 is an isometric view of a support platform of the magnetic device according to the invention, configured to install the magnetic device on an existing digital light processing apparatus.
- Figure 4 is an exploded view of an embodiment of the magnetic device according to the invention.
- Figure 5 is a cross-sectional top view of an embodiment of the magnetic device with a schematic illustration of the magnetic field generated by the inner and the outer Halbach cylinder arrays in the XY-plane, B̅_̅{̅x̅,̅y̅}̅(α, β); in this embodiment, the solenoid is not activated and ∥B̅_̅{̅z̅}̅∥ = 0.
- Figure 6 is a cross-sectional top view of another embodiment of the magnetic device with a schematic illustration of the magnetic field generated by the inner and the outer Halbach cylinder arrays in the XY-plane, B̅_̅{̅x̅,̅y̅}̅(α, β); in this embodiment, the solenoid is not activated and ∥B̅_̅{̅z̅}̅∥ = 0.
- Figure 7 shows the evolution of the magnetic field B̅_̅{̅x̅,̅y̅}̅(α, β) intensity in the XY-plane as a function of the angle α.
- Figure 8 is a graph showing the evolution of the spatial direction in the XY-plane of the magnetic field B̅_̅{̅x̅,̅y̅}̅(α, β) as a function of the angle β for a fixed value of the angle α.
- Figure 9 shows the resulting magnetic field in the XY-plane, B̅_̅{̅x̅,̅y̅}̅(α, β), for α = 0° and β = 0°; in this embodiment, the solenoid is not activated and ∥B̅_̅{̅z̅}̅∥ = 0.
- Figure 10 shows the resulting magnetic field in the XY-plane, B̅_̅{̅x̅,̅y̅}̅(α, β), for | α | = 45° and β = 0°; in this embodiment, the solenoid is not activated and ∥B̅_̅{̅z̅}̅∥ = 0.
- Figure 11 shows the resulting magnetic field in the XY-plane, B̅_̅{̅x̅,̅y̅}̅(α, β), for | α | = 90° and β = 0°; in this embodiment, the solenoid is not activated and ∥B̅_̅{̅z̅}̅∥ = 0.
- Figure 12 shows the resulting magnetic field in the XY-plane, B̅_̅{̅x̅,̅y̅}̅(α, β), for | α | = 45° and β = 45°; in this embodiment, the solenoid is not activated and ∥B̅_̅{̅z̅}̅∥ = 0.
- Figure 13 is a cross-sectional isometric view of a part of the magnetic device generating the adjustable magnetic field into the deposition zone.
- Figure 14 presents a flowchart illustrating the sequential steps involved in the production of a composite part, incorporating both the magnetic device according to the invention and the manufacturing method according to the invention.
- Figures 15, 17, 19, 21, 23, 25, 27, and 29 are respectively diagrams that portray various configurations of the applied magnetic field B̅.
- Figures 16, 18, 20, 22, 24, 26, 28, and 30 show the experimental self-assembly and alignment of chains of Fe₃O₄ nanoparticles embedded in a photocurable resin when exposed to the magnetic field B̅ corresponding to configurations of the Figures 15, 17, 19, 21, 23, 25, 27, and 29, respectively.
- Figure 31 is a side view of the magnetic device object of the invention mounted on a digital light processing apparatus, as shown in Figure 1, during a (photo)-curing step.
- Figure 32 illustrates an example of the spatial distribution and direction of the magneto-responsive fillers inside four layers of a consolidated composite matrix.

### DETAILED DESCRIPTION OF THE PREFERRED EMBODIMENT

The following description presents examples of a magnetic device, printer apparatuses and a manufacturing method in accordance with the embodiments of the present invention. The provided examples, along with corresponding illustrations, are described solely for illustrative purpose and should not being interpreted as limiting or restrictive.

An aspect of the invention pertains to a magnetic device that is destined to be installed on a three-dimensional printer apparatus for the manufacture of micro and nano polymeric composites. The magnetic device is configured to generate a homogeneous magnetic field B̅ in a specific zone located in a core of the magnetic device.

Advantageously, the homogeneous magnetic field B̅ generated by the magnetic device according to the invention is adjusted in both intensity and three-dimensional spatial direction to facilitate the manufacture of composite parts with desired magnetic anisotropies and/or oriented reinforcements.

Another aspect of the invention pertains to the three-dimensional printer apparatus that comprises the magnetic device. In particular, the three-dimensional printer is a resin-based apparatus, for instance a digital light processing (DLP), a direct-ink-writing (DIW), or a two-photon polymerization (2PP) machine.

The three-dimensional printer apparatus comprises a deposition zone within the specific zone located in the core of the magnetic device, wherein a precursor material comprising a polymeric resin and magneto-responsive fillers is poured. The deposition zone can be a vat for the DLP printer apparatuses, a microscope slide for 2PP printer apparatuses or a building platform for DIW printer apparatuses.

In particular, the adjustable homogeneous magnetic field B is applied to the precursor material.

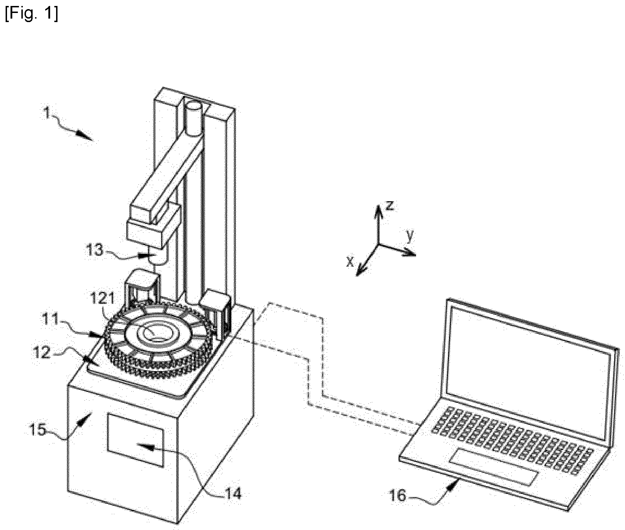

Figure 1 depicts a schematic example of an embodiment of the three-dimensional printer apparatus 1 according to the invention.

In the rest of the description, the three-dimensional printer apparatus 1 is also noted as 3D printer apparatus 1.

The 3D printer apparatus 1 comprises the magnetic device 11 according to the invention. In this embodiment, the printer apparatus 1 is a DLP printer apparatus. In particular, the 3D printer apparatus 1 is defined in a Cartesian reference frame represented by three axes X, Y and Z.

Each axis X, Y and Z has respectively a unit vector e̅ₓ̅, e̅_̅{̅y̅}̅, e̅_̅{̅z̅}̅.

The 3D printer apparatus 1 includes a support platform 12 comprising a deposition zone 121.

In particular, the deposition zone 121 is destined to receive a precursor material comprising for example a photocurable resin embedding magneto-responsive fillers. In particular, the support platform 12 and thus the deposition zone 121 are comprised in the XY-plane.

In this embodiment, the deposition zone 121 is a vat.

The magnetic device 11 is laid on the support platform 12 such that the deposition zone 121 is disposed in a specific zone (not represented in Figure 1) located within the core of the magnetic device 11.

The magnetic device 11 is configured to generate the adjustable homogeneous magnetic field noted B̅, non-represented in Figure 1, within its core and thus in the deposition zone 121.

The adjustable homogeneous magnetic field B̅ has three spatial components Bₓ, B_{y} and B_{z} along respectively the X, Y and Z-axes.

Also, the 3D printer apparatus 1 comprises a building platform 13 located above the support platform 12 and a radiation source 14 disposed under the support platform 12.

The radiation source 14 emits a light to illuminate the deposition zone 121.

In particular, the radiation source 14 is configured to consolidate the precursor material disposed in the deposition zone 121.

The 3D printer apparatus 1 comprises a protective box 15 and a computer 16. The computer 16 is configured to control the magnetic device 11, the building platform 13 and the radiation source 14, via a wired or wireless connection.

The computer 16 comprises a microcontroller such as Arduino^{™} or Raspberry Pi^{™}, non-represented, and a user interface, non-represented, wherein instructions are sent to the microcontroller.

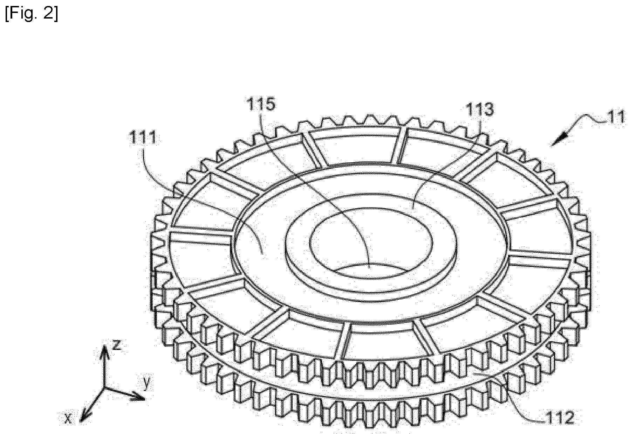

Figure 2 is an illustration of the magnetic device 11 according to the invention. The magnetic device 11 comprises an inner Halbach cylinder array 111, an outer Halbach cylinder array 112, and a solenoid 113.

In particular, both the inner 111 and outer 112 Halbach cylinder arrays are hollowed and positioned within each other. Also, the inner 111 and outer 112 Halbach cylinder arrays share a common revolution axis aligned along the Z-axis. In other terms, the inner 111 and outer 112 Halbach cylinder arrays are nested, the inner cylinder Halbach array 111 being inserted in the outer cylinder Halbach array 112.

The solenoid 113 is placed within the core of the inner Halbach cylinder 111 and has a revolution axis aligned along the Z-axis. Thus, the revolution axis of the solenoid 113 and the revolution axis of both the inner 111 and outer 112 Halbach cylinder arrays are coincident along the Z-axis.

The inner 111 and outer 112 Halbach cylinder arrays are configured to rotate around their revolution axis jointly or independently.

The inner 111 and outer 112 Halbach cylinder arrays each generate a uniform magnetic field B̅ᵢ̅ₙ̅ₙ̅ₑ̅ᵣ̅ and B̅ₒ̅ᵤ̅ₜ̅ₑ̅ᵣ̅ (not represented in Figure 2), respectively, in the XY-plane with the same intensity B₀.

Specifically, the magnetic fields B̅ᵢ̅ₙ̅ₙ̅ₑ̅ᵣ̅ and B̅ₒ̅ᵤ̅ₜ̅ₑ̅ᵣ̅ are homogeneous within the specific zone 115 located in the core of the magnetic device 11 and more particularly in the core of the solenoid 113.

Thus, when the magnetic device 11 is laid on the 3D apparatus printer 1, the deposition zone 121 is disposed in the specific zone 115 and the magnetic fields B̅ᵢ̅ₙ̅ₙ̅ₑ̅ᵣ̅ and B̅ₒ̅ᵤ̅ₜ̅ₑ̅ᵣ̅ are homogeneous in the deposition zone 121.

The vectorial sum of the magnetic fields B̅ᵢ̅ₙ̅ₙ̅ₑ̅ᵣ̅ and B̅ₒ̅ᵤ̅ₜ̅ₑ̅ᵣ̅ results in a magnetic field in the XY-plane and noted : B̅_̅{̅x̅,̅y̅}̅(α, β) = B̅ᵢ̅ₙ̅ₙ̅ₑ̅ᵣ̅ + B̅ₒ̅ᵤ̅ₜ̅ₑ̅ᵣ̅.

The solenoid 113 generates a homogeneous magnetic field B̅_̅{̅z̅}̅, which is directed along the Z-axis (not represented in the Figure 2).

Consequently, the homogeneous magnetic field B̅ (not represented in figure 2) generated by the magnetic device 11 results from the vectorial sum of the magnetic fields B̅ᵢ̅ₙ̅ₙ̅ₑ̅ᵣ̅, B̅ₒ̅ᵤ̅ₜ̅ₑ̅ᵣ̅ and B̅_̅{̅z̅}̅, such that B̅ = B̅_̅{̅x̅,̅y̅}̅(α,β) + B̅_̅{̅z̅}̅.

According to the invention, the inner 111 and outer 112 Halbach cylinder arrays are configured to be rotated by a same angle α from the Y-axis and in anticlockwise and clockwise directions, respectively, around their common revolution axis aligned along the Z-axis.

In particular, the intensity of the resulting magnetic field B̅_̅{̅x̅,̅y̅}̅(α, β) in the XY-plane, noted ∥B̅_̅{̅x̅,̅y̅}̅(α, β)∥, is adjusted through the angle α.

According to the invention, the inner 111 and outer 112 Halbach cylinder arrays are configured to rotate jointly by an angle β from the Y-axis around their common revolution axis, in either clockwise or anticlockwise directions.

In particular, the spatial direction of the resulting magnetic field B̅_̅{̅x̅,̅y̅}̅(α, β) in the XY-plane, is adjusted through the angle β.

The adjustment of the intensity and the spatial direction in the XY-plane of the resulting magnetic field B̅_̅{̅x̅,̅y̅}̅(α, β) is detailed further in the description.

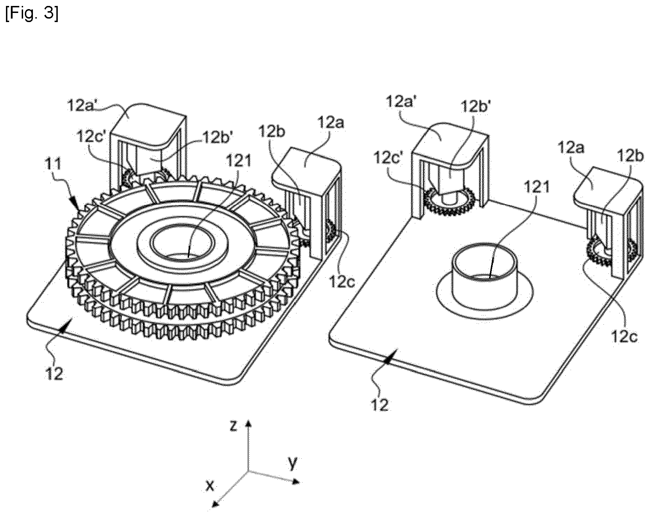

Figure 3 depicts the magnetic device 11 positioned on the support platform 12. In this particular embodiment, the support platform 12 comprises a first backing frame 12a comprising a first stepper motor 12b and a geared wheel 12c in contact with the inner Halbach cylinder array 111. Additionally, the support platform 12 comprises a second backing frame 12a' comprising a second stepper motor 12b' and a geared wheel 12c' in contact with the outer Halbach cylinder array 112.

The computer 16 controls the first stepper motor 12b to activate the geared wheel 12c, resulting in the rotation of the inner Halbach cylinder array 111. Similarly, the computer 16 controls the second stepper motor 12b' to activate the geared wheel 12c', causing the rotation of the outer Halbach cylinder array 112. Consequently, each Halbach cylinder array is associated to a geared wheel controlled by a stepper motor, enabling independent or simultaneous rotation of each Halbach cylinder array.

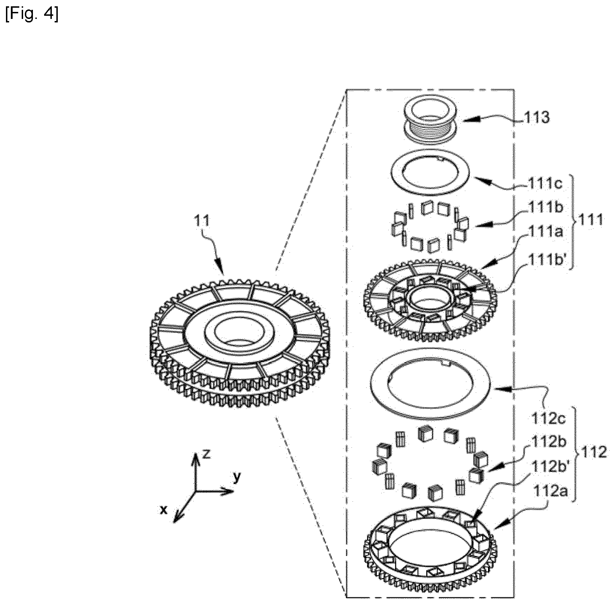

Figure 4 is an exploded view of an embodiment of the structure of the magnetic device 11.

In particular, the Figure 4 shows an exploded view of the inner Halbach cylinder array 111, the outer Halbach cylinder array 112 and the solenoid 113. The inner Halbach cylinder array 111 comprises a toothed ring nut 111a that supports its rotation movement and contains P permanent magnets 111b, with P a natural number superior to zero, which are fixed in a housing thank to appropriate receptacles 111b' and a lid 111c.

The outer Halbach cylinder array 112 comprises a toothed ring nut 112a that supports its rotation movement and contain P permanent magnets 112b, with P a natural number superior to zero, which are fixed in their housing thank to appropriate receptacles 112b' and a lid 112c.

Halbach arrays are specific arrangement of magnetic structures designed to enhance magnetic flux on one side while minimizing or nullifying it on the opposite side. Specifically, cylindrical Halbach arrays engineered to create a uniform dipolar magnetic field are referred to as Halbach dipoles. In an ideal scenario, a Halbach dipole is visualized as an infinitely long tube with a continuous rotation of magnetization within the wall material, resulting in a constant magnetic field in the cross-section. The orientation of magnetization, denoted as Φ, depends on a positional angle θ and follows the equation Φ = (k + 1)θ, where k is an integer and determines the number of pole-pairs (p) or modes (p = 2|k|; k=±1 for a dipolar, k=±2 for a quadrupolar field, etc.). When k>0, the magnetic field remains confined within the cylinder, while for k<0, it exists exclusively outside the cylinder.

Since realizing an infinitely long tube with continuous magnetization changes is impossible, practical Halbach array designs employ discretization methods. The straightforward one involves dividing the cylindrical structure into P magnets, with P a natural number superior to zero, of identical shape (polygonal, round, or trapezoidal) and magnetization, but distinct magnetization directions, as reported in the literature, e.g. the article of Oleg Yurievich Tretiak et al. "Variable single-axis magnetic-field generator using permanent magnets*"* and the article of Peter Blümler *"Magnetic Guiding with Permanent Magnets: Concept, Realization and Applications to Nanoparticles and Cells".*

In this embodiment, by way of illustration only (Figure 4), the inner (111) and outer (112) Halbach cylinder arrays are discretized into P cuboidal permanent magnets. The permanent magnets are rotated to predetermined magnetization directions to generate a homogeneous magnetic field in the XY-plane within the specific zone 115 in the core of the magnetic device, and thus in the deposition zone 121 of the three-dimensional printer apparatus 1.

The solenoid 113 comprises N turns of a conductive material, with N a natural number superior to zero.

The intensity ∥B̅_̅{̅z̅}̅∥ of the magnetic field B̅_̅{̅z̅}̅ generated by the solenoid 113 is given by the formula ∥B̅_̅{̅z̅}̅∥ = µ₀ * N * I where µ₀ is the magnetic constant, N is the number of turns, and I is a current flowing through the solenoid. Thus, the intensity ∥B̅_̅{̅z̅}̅∥ of the magnetic field generated by the solenoid 113 can be adjusted by adjusting the numbers of turns N and/or the current I. By construction, the generated field B̅_̅{̅z̅}̅ within the solenoid 113, or in the close proximity of its upper and bottom faces is homogeneous.

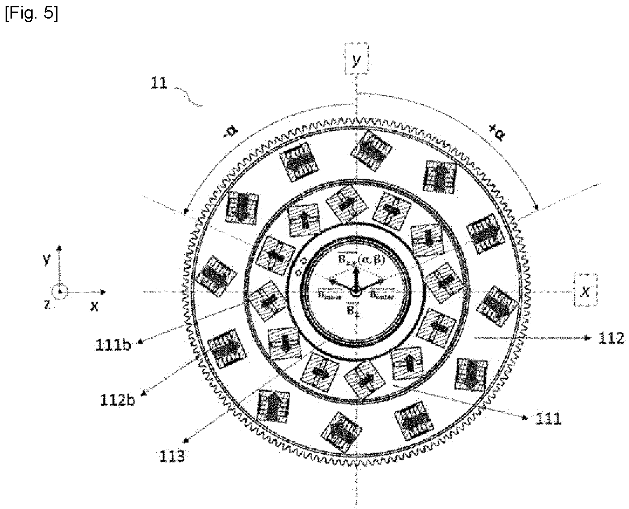

Figure 5 is an illustration of a top view of the magnetic device 11, in the XY-plane. For the sake of clarity, the field B̅_̅{̅z̅}̅ along the Z-axis is also indicated in Figure 5 but,

in this embodiment, the solenoid 113 is not activated and ∥B̅_̅{̅z̅}̅∥ = 0 T.

The shape, the number, the spatial and magnetic arrangement of the permanent magnets 111b and 112b enable the inner Halbach cylinder array 111 to generate the magnetic field B̅ᵢ̅ₙ̅ₙ̅ₑ̅ᵣ̅ and the outer Halbach cylinder array 112 to generate the magnetic field B̅ₒ̅ᵤ̅ₜ̅ₑ̅ᵣ̅, such that the magnetic fields B̅ᵢ̅ₙ̅ₙ̅ₑ̅ᵣ̅ and B̅ₒ̅ᵤ̅ₜ̅ₑ̅ᵣ̅ are of same intensity.

In this particular embodiment, for each Halbach cylinder array 111, 112, the P cuboidal-shaped permanent magnets 111b and 112b, are evenly distributed around the Z-axis and properly rotated around their symmetry axis of an angle Φ, where Φ is the angle between the magnetization vectors of adjacent magnets chosen to fulfil the following equation: PΦ = (k + 1)360°, with k > 0. In this embodiment, P = 12, k = 1 (dipolar field) and Φ = 60°.

In particular, the magnetic field B̅ᵢ̅ₙ̅ₙ̅ₑ̅ᵣ̅ generated by the permanent magnets 111b is spatially oriented in the XY-plane and is homogeneous within the inner core of the inner Halbach cylinder array 111.

In particular, the magnetic field B̅ₒ̅ᵤ̅ₜ̅ₑ̅ᵣ̅ generated by the permanent magnets 112b is spatially oriented in the XY-plane and is homogeneous within the inner core of the outer Halbach cylinder array 112.

Thus, the magnetic field B̅ᵢ̅ₙ̅ₙ̅ₑ̅ᵣ̅ and the magnetic field B̅ₒ̅ᵤ̅ₜ̅ₑ̅ᵣ̅ are homogeneous and have an equal intensity B₀, within the specific zone 115 located in the magnetic device 11, and thus in the deposition zone 121 when the magnetic device is installed in the three-dimensional printer apparatus 1.

For example, B₀ is comprised between 0 T and 0.5 T.

The magnetic field B̅ₒ̅ᵤ̅ₜ̅ₑ̅ᵣ̅ has a spatial direction in the XY-plane and is defined as B̅ₒ̅ᵤ̅ₜ̅ₑ̅ᵣ̅ = B₀e̅ₒ̅ᵤ̅ₜ̅ₑ̅ᵣ̅, the direction corresponding to the direction of the vector e̅ₒ̅ᵤ̅ₜ̅ₑ̅ᵣ̅. The magnetic field B̅ᵢ̅ₙ̅ₙ̅ₑ̅ᵣ̅ has a spatial direction in the XY-plane and is defined as B̅ᵢ̅ₙ̅ₙ̅ₑ̅ᵣ̅ = B₀e̅ᵢ̅ₙ̅ₙ̅ₑ̅ᵣ̅, the direction corresponding to the direction of the vector e̅ᵢ̅ₙ̅ₙ̅ₑ̅ᵣ̅.

The spatial directions of the magnetic field B̅ᵢ̅ₙ̅ₙ̅ₑ̅ᵣ̅ and the magnetic field B̅ₒ̅ᵤ̅ₜ̅ₑ̅ᵣ̅ in the XY-plane, respectively, are adjustable by rotating the inner Halbach cylinder array 111 and the outer Halbach cylinder array 112, respectively, around their common revolution axis such that the resulting magnetic field B̅_̅{̅x̅,̅y̅}̅(α, β) can be expressed as their vectorial sum, thus : B̅_̅{̅x̅,̅y̅}̅(α, β) = B̅ᵢ̅ₙ̅ₙ̅ₑ̅ᵣ̅ + B̅ₒ̅ᵤ̅ₜ̅ₑ̅ᵣ̅.

According to an embodiment, it is possible to tune the intensity of the resulting magnetic field B̅_̅{̅x̅,̅y̅}̅(α, β) with a following process.

The process comprises a first step of setting the spatial directions of B̅ₒ̅ᵤ̅ₜ̅ₑ̅ᵣ̅ and B̅ᵢ̅ₙ̅ₙ̅ₑ̅ᵣ̅ colinear and parallel to the Y-axis. The first step is an example of initial configuration of spatial directions of B̅ₒ̅ᵤ̅ₜ̅ₑ̅ᵣ̅ and B̅ᵢ̅ₙ̅ₙ̅ₑ̅ᵣ̅ and is not limitative.

The process comprises a second step of rotating the inner Halbach cylinder array 111 in anticlockwise direction by an angle -α from the Y-axis, and the outer Halbach cylinder arrays 112 in clockwise direction by an angle +α from the Y-axis. The first and second steps of the process can be realized simultaneously or indifferently one before another.

As a result, the spatial components of B̅ₒ̅ᵤ̅ₜ̅ₑ̅ᵣ̅ and B̅ᵢ̅ₙ̅ₙ̅ₑ̅ᵣ̅ along the X and Y-axes are as follows: B̅ₒ̅ᵤ̅ₜ̅ₑ̅ᵣ̅ = (B₀sin(α), B₀cos(α)) and B̅ᵢ̅ₙ̅ₙ̅ₑ̅ᵣ̅ = (B₀sin(-α), B₀cos(-α)) respectively and the spatial components of the resulting magnetic field B̅_̅{̅x̅,̅y̅}̅(α, β) = B̅ᵢ̅ₙ̅ₙ̅ₑ̅ᵣ̅ + B̅ₒ̅ᵤ̅ₜ̅ₑ̅ᵣ̅ write as (0, 2B₀cos (α)).

Thus, Bₓ = 0 T and B_{y} = 2B₀cos (α).

The intensity ∥B̅_̅{̅x̅,̅y̅}̅(α, β)∥ of the resulting magnetic field B̅_̅{̅x̅,̅y̅}̅(α,β) is as follows : $\left‖\vec{{B}_{x , y}}\left(α, β\right)\right‖ = \sqrt{{B}_{x}^{2} + {B}_{y}^{2}} = 2 {B}_{0} cos \left(α\right)$.

Thus, the intensity ∥B̅_̅{̅x̅,̅y̅}̅(α, β)∥ depends only on the angle α, the angle α being adjustable.

The angle α is positive in the clockwise direction of the XY-plane of the Figure 5. The angle α is comprised between 0° and 90°.

The inner 111 and outer 112 Halbach cylinder arrays can be rotated jointly around their common revolution axis, in order to rotate the spatial direction of the magnetic field B̅_̅{̅x̅,̅y̅}̅(α, β) in the XY-plane.

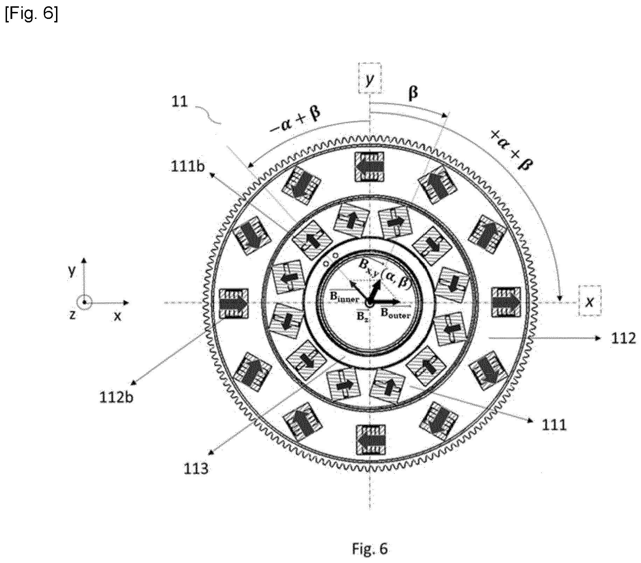

Figure 6 is an illustration of a top view of the magnetic device 11 in the XY-plane, wherein the magnetic field B̅_̅{̅x̅,̅y̅}̅(α, β) (whose intensity has been adjusted through the process described in Figure 5) is rotated around the Z-axis, by an angle β from the Y-axis.

For the sake of clarity, the field B̅_̅{̅z̅}̅ along the Z-axis is not indicated in Figure 6 as, in this embodiment, the solenoid 113 is not activated and ∥B̅_̅{̅z̅}̅∥ = 0 T.

The angle β is positive in the clockwise direction of the XY-plane of the Figure 6.

In particular, the rotation of the spatial direction of the resulting magnetic field B̅_̅{̅x̅,̅y̅}̅(α, β) is obtained by jointly rotating the inner and outer Halbach cylinder arrays (111, 112) of the same angle β from the Y-axis.

Consequently, the direction e̅ₒ̅ᵤ̅ₜ̅ₑ̅ᵣ̅ of the magnetic field B̅ₒ̅ᵤ̅ₜ̅ₑ̅ᵣ̅ has an angle of α + β from the Y-axis.

Consequently, the direction e̅ᵢ̅ₙ̅ₙ̅ₑ̅ᵣ̅ of the magnetic field B̅ᵢ̅ₙ̅ₙ̅ₑ̅ᵣ̅ has an angle of -α + β from the Y-axis.

Thus, the spatial components of the magnetic field B̅ₒ̅ᵤ̅ₜ̅ₑ̅ᵣ̅ along the X and Y-axes are as follows: B̅ₒ̅ᵤ̅ₜ̅ₑ̅ᵣ̅ = B₀(sin (α + β), cos (α + β)).

Thus, the spatial components of the magnetic field B̅ᵢ̅ₙ̅ₙ̅ₑ̅ᵣ̅ along the X, Y-axes are as follows: B̅ᵢ̅ₙ̅ₙ̅ₑ̅ᵣ̅ = B₀(sin (-α + β) , cos (-α + β)).

As a result, the spatial components of B̅_̅{̅x̅,̅y̅}̅(α, β) write: B̅_̅{̅x̅,̅y̅}̅(α, β) = B₀(sin(α + β) + sin(-α + β), cos (α + β) + cos (-α + β)).

After simplifying the components of the resulting magnetic field B̅_̅{̅x̅,̅y̅}̅(α, β) using trigonometric formulas, B̅_̅{̅x̅,̅y̅}̅(α, β) is expressed as follows: B̅_̅{̅x̅,̅y̅}̅(α, β) = 2B₀(cos(α)sin(β), cos(α)cos(β) ) with Bₓ and B_{y} equal respectively as 2B₀cos(α)sin(β) and 2B₀cos(α)cos(β).

The intensity ∥B̅_̅{̅x̅,̅y̅}̅(α, β)∥ of the resulting magnetic field B̅_̅{̅x̅,̅y̅}̅(α, β) is as follows: $\left‖\vec{{B}_{x , y}}\left(α, β\right)\right‖ = \sqrt{{B}_{x}^{2} + {B}_{y}^{2}} = 2 {B}_{0} cos \left(α\right)$, which depends only on the angle α. Thus, the role of the angle β is only to rotate the spatial direction of the magnetic field B̅_̅{̅x̅,̅y̅}̅(α, β) in the XY-plane.

Consequently, $\vec{B} = {B}_{{x}_{{\vec{e}}_{x}}} + {B}_{{y}_{{\vec{e}}_{y}}} + {B}_{{z}_{{\vec{e}}_{z}}} = \vec{{B}_{x , y}} \left(α, β\right) + \vec{{B}_{z}}$ with the intensity ∥B̅∥ being equal to $\sqrt{{\left(2{B}_{0}cos\left(α\right)\right)}^{2} + {\left‖\vec{{B}_{z}}\right‖}^{2}}$.

It is worth noticing that the X and Y-axes have a symmetrical role and can be reversed in the above calculations and formulas. The Halbach cylinder arrays 111, 112 can be rotated indifferently from the Y-axis or the X-axis, with an analogous reasoning.

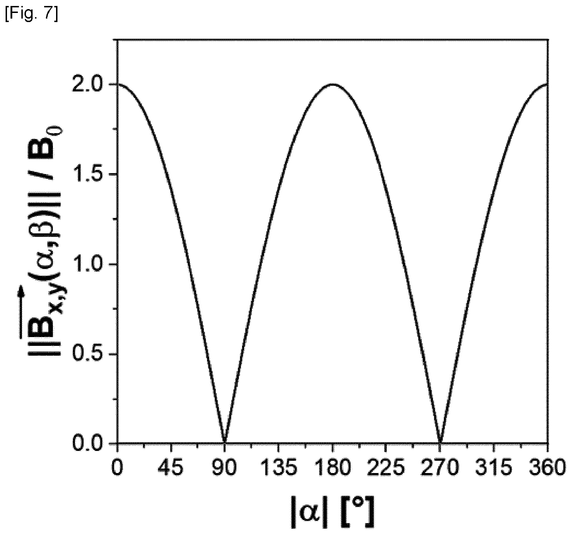

Figure 7 shows the normalized intensity of B̅_̅{̅x̅,̅y̅}̅(α, β) as function of the angle α, for a fixed value of β. The normalized intensity of B̅_̅{̅x̅,̅y̅}̅(α, β) writes ∥B̅_̅{̅x̅,̅y̅}̅(α, β) ∥/B₀.

As the intensity ∥B̅_̅{̅x̅,̅y̅}̅(α, β)∥ is a periodical function of the angle α, all the intensities comprised between 2B₀ and 0 T can be obtained by varying the value of the angle α between 0° and 90° for example. In particular, it is possible to maximize the intensity ∥B̅_̅{̅x̅,̅y̅}̅(α, β)∥ when the angle α is equal to 0°.

In particular, if | α | corresponds to the absolute value of the angle α, it is possible to obtain a resulting magnetic field B̅_̅{̅x̅,̅y̅}̅(α, β) of zero intensity when the angle |α | is equal to 90°, which is difficult to obtain otherwise.

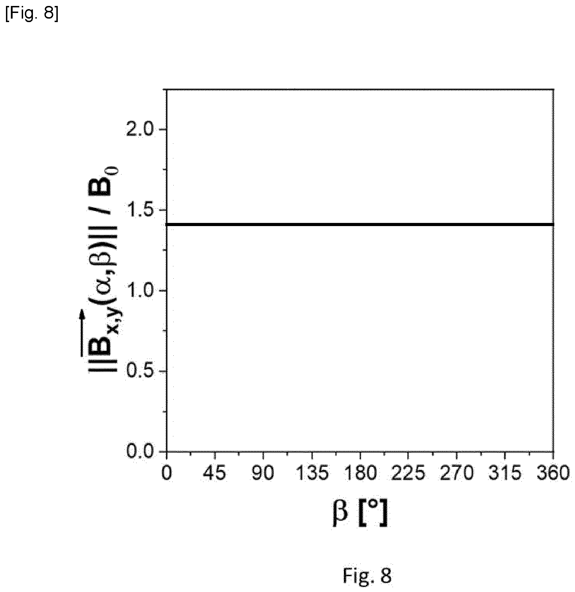

Figure 8 shows the normalized intensity ∥B̅_̅{̅x̅,̅y̅}̅(α, β)∥ of B̅_̅{̅x̅,̅y̅}̅(α, β) as a function of angle β, for a fixed value of the angle | α | equal to 45°. The normalized intensity writes as ∥B̅_̅{̅x̅,̅y̅}̅(α, β) ∥/B₀.

The normalized intensity ∥B̅_̅{̅x̅,̅y̅}̅(α, β) ∥/B₀, as introduced in Figure 7, is constant for any angle β comprised in the range 0° to 360°, as shown in Figure 8.

Thus, the simultaneous rotation of the two Halbach arrays by the same angle β affects the spatial direction of the magnetic field B̅_̅{̅x̅,̅y̅}̅(α, β) in the XY-plane, but not its intensity, ∥B̅_̅{̅x̅,̅y̅}̅(α, β)∥, as the normalized intensity ∥B̅_̅{̅x̅,̅y̅}̅(α, β) ∥/B₀ does not vary when the spatial direction of the magnetic field B̅_̅{̅x̅,̅y̅}̅(α, β) varies.

The same conclusions apply for any other fixed value of the angle α.

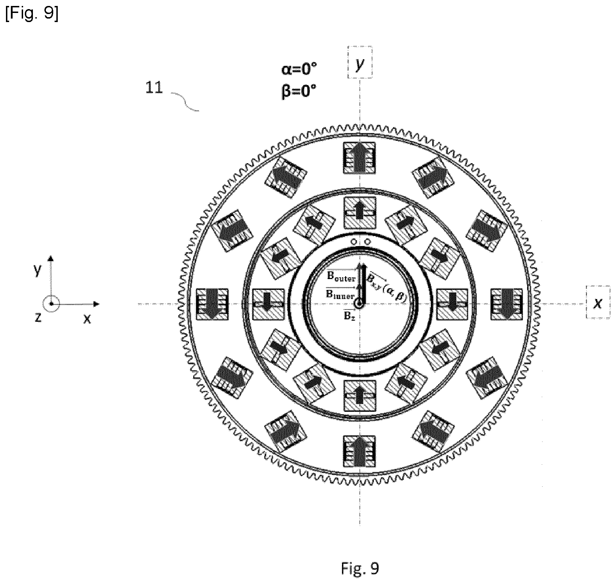

Figure 9 shows a top view of the magnetic device 11, and the magnetic field B̅_̅{̅x̅,̅y̅}̅(α, β) in the XY-plane, the magnetic field B̅_̅{̅x̅,̅y̅}̅(α, β) corresponding to the conditions: α = 0° and β = 0°. In this embodiment, the intensity of the resulting magnetic field B̅_̅{̅x̅,̅y̅}̅(α, β) is equal to ∥B̅_̅{̅x̅,̅y̅}̅(α, β)∥ = 2B₀ and the solenoid is not activated which means that ∥B̅_̅{̅z̅}̅∥ is equal to 0 T.

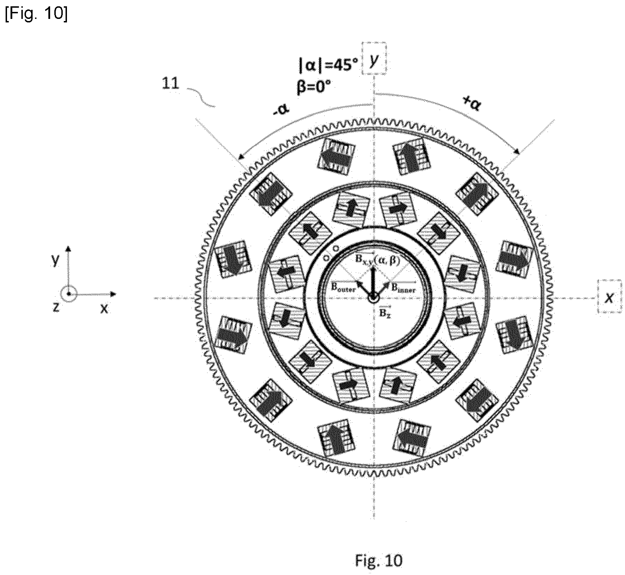

Figure 10 shows a top view of the magnetic device 11, and the magnetic field B̅_̅{̅x̅,̅y̅}̅(α, β) in the XY-plane, the magnetic field B̅_̅{̅x̅,̅y̅}̅(α, β) corresponding to the conditions : |α| = 45° and β = 0°. In this embodiment, the intensity of the magnetic field B̅_̅{̅x̅,̅y̅}̅(α, β) is equal to $\left‖\vec{{B}_{x , y}}\left(α, β\right)\right‖ = \sqrt{2} {B}_{0}$ and the solenoid is not activated which means that ∥B̅_̅{̅z̅}̅∥ is equal to 0 T.

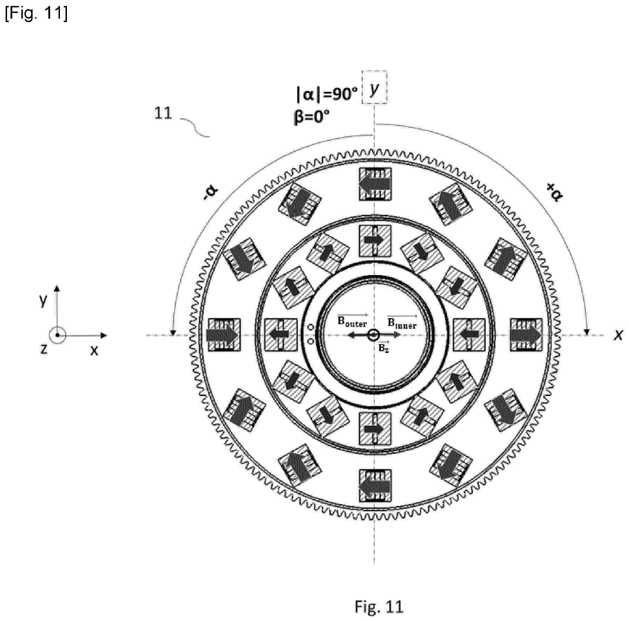

Figure 11 shows a top view of the magnetic device 11 and the magnetic field B̅_̅{̅x̅,̅y̅}̅(α, β) in the XY-plane, the magnetic field B̅_̅{̅x̅,̅y̅}̅(α, β) corresponding to the condition: | α | = 90° and β = 0°. In this embodiment, the intensity of the magnetic field B̅_̅{̅x̅,̅y̅}̅(α, β) is equal to ∥B̅_̅{̅x̅,̅y̅}̅(α, β)∥=0 T and the solenoid is not activated which means that ∥B̅_̅{̅z̅}̅∥ = 0 T.

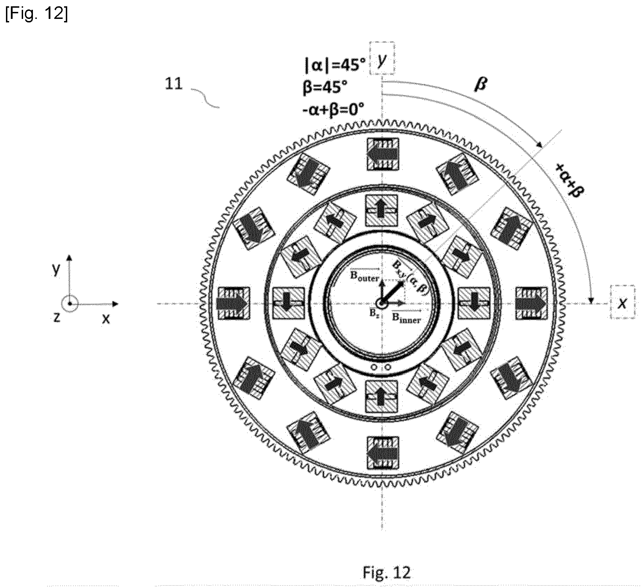

Figure 12 shows a top view of the magnetic device 11 and the magnetic field B̅_̅{̅x̅,̅y̅}̅(α, β) in the XY-plane, the magnetic field B̅_̅{̅x̅,̅y̅}̅(α, β) corresponding to the condition: | α | = 45° and β = 45°. In this embodiment, the intensity of the magnetic field B̅_̅{̅x̅,̅y̅}̅(α, β) is equal to $\left‖\vec{{B}_{x , y}}\left(α, β\right)\right‖ = \sqrt{2} {B}_{0}$ and the solenoid is not activated which means that ∥B̅_̅{̅z̅}̅∥ is equal to 0 T.

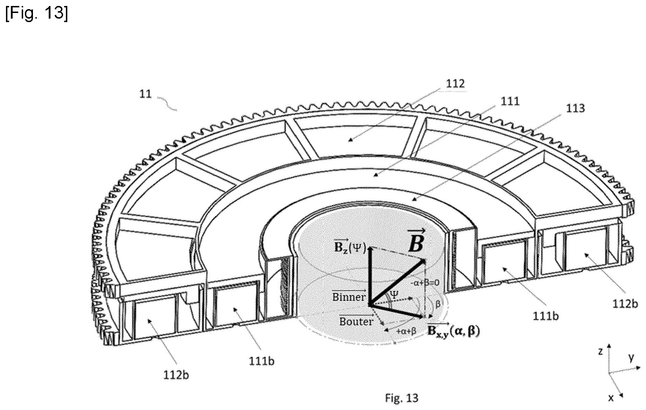

Figure 13 is a cross-sectional isometric view of the magnetic device 11 generating an adjustable magnetic field B̅ into the deposition zone 121 using the inner 111 and outer 112 Halbach cylinder arrays and the solenoid 113 such that the homogeneous magnetic field B is as follows: B = B̅ᵢ̅ₙ̅ₙ̅ₑ̅ᵣ̅ + B̅ₒ̅ᵤ̅ₜ̅ₑ̅ᵣ̅ + B̅_̅{̅z̅}̅ = B̅_̅{̅x̅,̅y̅}̅(α, β) + B̅_̅{̅z̅}̅.

In particular, Figure 13 shows the magnetic fields B̅ᵢ̅ₙ̅ₙ̅ₑ̅ᵣ̅ and B̅ₒ̅ᵤ̅ₜ̅ₑ̅ᵣ̅ and their respective angles -α+ β and α+ β from the Y-axis.

In this embodiment, the three-dimensional spatial direction of the homogeneous magnetic field B̅ results from the magnetic fields B̅_̅{̅x̅,̅y̅}̅(α, β) and B̅_̅{̅z̅}̅, with B̅_̅{̅x̅,̅y̅}̅(α, β) adjusted as described previously. In particular, the spatial direction of the magnetic field B̅ with respect to the XY-plane is given by an azimuthal angle Ψ.

The azimuthal angle Ψ corresponds to the angle between B̅_̅{̅x̅,̅y̅}̅(α, β) and B.

In particular, the azimuthal angle Ψ is defined as $Ψ = {tan}^{- 1} \left(\frac{\left‖\vec{{B}_{z}}\right‖}{\left‖\vec{{B}_{x , y}}\left(α, β\right)\right‖}\right) = {tan}^{- 1} \left(\frac{{μ}_{0} NI}{2 {B}_{0} cos \left(α\right)}\right)$ for α different from 90° and 270°.

In particular, the azimuthal angle Ψ is defined as Ψ = 90° for α equal to 90° or 270°. As the intensity of B̅_̅{̅z̅}̅ and Ψ are related, B̅_̅{̅z̅}̅ writes as B̅_̅{̅z̅}̅(Ψ).

In this embodiment, the solenoid 113 is activated which means that ∥B̅_̅{̅z̅}̅∥ ≠ 0 T. The generated magnetic field B̅ = B̅_̅{̅x̅,̅y̅}̅(α, β)+ B̅_̅{̅z̅}̅ (Ψ) is thus out of the XY-plane. The angle (α+β) indicates a polar angle, while the angle Ψ indicates the azimuthal angle.

Another aspect of the invention pertains to a method for manufacturing a composite part using the 3D printer apparatus 1 according to the invention.

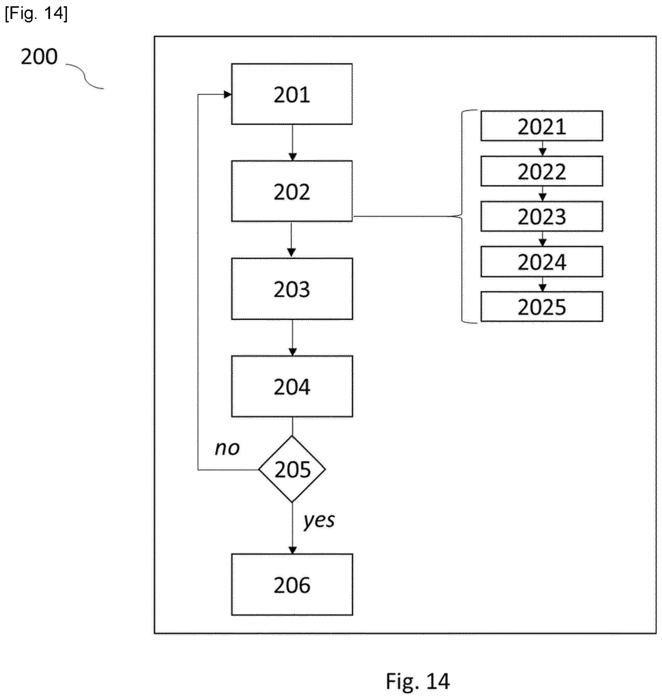

Figure 14 is a flowchart showing all the steps of the method 200 for manufacturing a composite part using the 3D printer apparatus 1 according to the invention.

The method 200 comprises a step 201 of introducing a precursor material into the deposition zone 121.

The precursor material comprises a photocurable liquid resin embedding magneto-responsive fillers.

In an embodiment, the magneto-responsive fillers are dispersed.

The dispersion of the magneto-responsive fillers within the resin results for example from, but not limited to, mechanical stirring or sonication of the precursor material. In an embodiment, the magnetically responsive particles are not dispersed and are organised in an initial alignment.

The photocurable resin may comprise, but not limited to, any combinations of (meth)acrylic based photopolymers used for vat photopolymerization processes, for example: polyethyleneglycol diacrylate (PEGDA), triethyleneglycol dimethacrylate (TEGDMA), isobornyl acrylate (IBOA), urethane dimethacrylate (UDMA), bisphenol A-glycidyl methacrylate (Bis-GMA), pentaerythritol tetraacrylate (PETA), bisphenol A ethoxylate diacrylate (BEDA), bisphenol A ethoxylate dimethacrylate (BEMA), hexandyol diacrylate (HDDA) and others.

The magneto-responsive fillers can have any desired shape as fibers, rods, particles, nanoparticles, whiskers, platelets, etc.

The magneto-responsive fillers can be hard or soft, for example, iron-oxide nanoparticles, ferrite, NdFeB, SmCo, Alnico, SmFeN, nickel or cobalt roads etc.

The magneto-responsive fillers, hard or soft, can also comprise a non-magnetic material functionalized with a magnetic material. The non-magnetic material can include aluminium oxide (Al₂O₃), silica (SiO₂), gold or silver nanoparticles, calcium phosphate and others, which can be magnetically functionalized with magneto-responsive fillers by known methods.

The method 200 comprises a step 202 of generating, by the magnetic device 11, a homogeneous magnetic field B̅ in the deposition zone 121, the homogeneous magnetic field B̅ having a desired intensity ∥B̅∥ and a desired three-dimensional spatial direction B = B̅_̅{̅x̅,̅y̅}̅(α, β) + B̅_̅{̅z̅}̅(Ψ).

In particular, the generation of the magnetic field B̅ comprises the following substeps 2021, 2022, 2023, 2024 and 2025.

In the sub-step 2021, the computer 16 receives as inputs : i) the desired intensity ∥B̅∥, ii) the azimuthal angle Ψ, and iii) the angle β, in order to obtain the desired three-dimensional spatial direction of the homogeneous magnetic field B.

As aforementioned, the magnetic device 11 is used to generate the magnetic field B̅ with spatial components Bₓ, B_{y} and B_{z} where Bₓ and B_{y} are adjusted in intensity and spatial direction in the XY-plane, using the counter rotation of the inner 111 and the outer 112 Halbach cylinder arrays, and B_{z} is adjusted in intensity and spatial direction along the Z-axis by using the solenoid 113.

In an embodiment, the initial configuration of the magnetic device 11 is such that the angle | α | is equal to 90°, β is initially equal to 0° and the solenoid 113 is not activated, meaning that ∥B̅_̅{̅z̅}̅∥(Ψ)∥ is equal to 0 T.

In this configuration, the magnetic field B̅ₒ̅ᵤ̅ₜ̅ₑ̅ᵣ̅ forms the angle α equal to 90° with the Y-axis and the magnetic field B̅ᵢ̅ₙ̅ₙ̅ₑ̅ᵣ̅ forms the angle -α equal to -90° with the Y-axis and the resulting magnetic field B̅_̅{̅x̅,̅y̅}̅(α, β) has a zero intensity: ∥B̅_̅{̅x̅,̅y̅}̅(α, β)∥ is equal to 0 T.

The intensity ∥B̅∥ of the generated magnetic field is thus equal to 0 T.

In the sub-step 2022, the computer 16 calculates, through an algorithm, the value of the angle α and the value of the current I flowing through the solenoid required to generate the magnetic field B̅ with the desired intensity and the desired three-dimensional spatial direction, with components B̅_̅{̅x̅,̅y̅}̅(α, β) and B̅_̅{̅z̅}̅(Ψ), respectively. In particular, the algorithm comprises the following formulas: $α = arccos \left(\frac{\left‖\vec{B}\right‖ cosΨ}{2 {B}_{0}}\right)$ and $I = \frac{\left‖\vec{B}\right‖ sinΨ}{{μ}_{0} N}$

Then, in the sub-step 2023, the angle - α is sent to the first stepper motor 12b to rotate the transmission wheel gear 12c related to the inner Halbach cylinder array 111 to obtain the angle -α between B̅ₒ̅ᵤ̅ₜ̅ₑ̅ᵣ̅ and the Y-axis.

Also, in the sub-step 2023, the angle α is sent, by the computer, to the second stepper motor 12b' to rotate the transmission wheel gear 12c' related to the outer Halbach cylinder array 112 to obtain the angle α between B̅ₒ̅ᵤ̅ₜ̅ₑ̅ᵣ̅ and the Y-axis.

Consequently, the magnetic field B̅ᵢ̅ₙ̅ₙ̅ₑ̅ᵣ̅ of the inner Halbach 111 array is rotated from the Y-axis by the angle -90 + α in order to obtain the angle -α between B̅ᵢ̅ₙ̅ₙ̅ₑ̅ᵣ̅ and the Y-axis.

Consequently, the magnetic field B̅ₒ̅ᵤ̅ₜ̅ₑ̅ᵣ̅ of the outer Halbach array 112 is rotated from the Y-axis by the angle 90 - α in order to obtain the angle α between B̅ₒ̅ᵤ̅ₜ̅ₑ̅ᵣ̅ and the Y-axis.

In an embodiment, the sub-step 2023 can be applied respectively to the inner Halbach cylinder array 111 and the outer Halbach cylinder array 112 indifferently.

Thus, after the sub-step 2023, a resulting magnetic field B̅_̅{̅x̅,̅y̅}̅(α, β) of intensity ∥B̅_̅{̅x̅,̅y̅}̅(α, β) ∥is generated in the specific zone 115 and thus in the deposition zone 121 located in the specific zone 115.

In the sub-step 2024, the calculated value of current I is sent to the solenoid 113, and a magnetic field B̅_̅{̅z̅}̅r̅(Ψ) of intensity ∥B̅_̅{̅z̅}̅(Ψ)∥ is generated.

During the sub-step 2025, the computer 16 sends a setpoint corresponding to the angle β received as an input in the sub-step 2021 in order to rotate jointly the inner and outer Halbach cylinder arrays by the same angle β around their revolution axis, and to obtain the desired three-dimensional spatial direction of the homogeneous magnetic field B.

As visible in Figure 14, the method 200 comprises a step 203 of orienting the magneto-responsive fillers in a first alignment by applying the generated magnetic field B.

If the magneto-responsive fillers are randomly distributed, the application of the homogeneous magnetic field B̅ drives the magneto-responsive fillers into oriented and self-assembled chain-like structures, for soft magneto-responsive fillers, or into oriented dipoles, for hard magneto-responsive fillers. The alignment corresponds to the three-dimensional spatial direction of the first magnetic field B.

If the magneto-responsive fillers are already oriented along a predetermined alignment and are already organized in chain-like structures, for example along the initial direction, the application of the homogeneous magnetic field B̅ allows the rotation of the chain-like structures along the three-dimensional spatial direction of the field B.

The method 200 comprises a step 204 of consolidating the precursor material in the deposition zone 121 with the magneto-responsive fillers held in their first alignment by a first magnetic field B, as described in the step 203. The consolidation may comprise partially or fully curing. Depending on the three-dimensional printer apparatus, the consolidated precursor material is in the form of a two-dimensional layer, if the printer apparatus is a DLP or DIW apparatus, or in the form of voxels, if the printer apparatus is a 2PP apparatus.

In an embodiment, wherein the precursor material is a photocurable resin, the consolidation corresponds to photo-curing by selectively exposing a portion of the precursor material to an UV to IR light shined by the radiation source 14 while maintaining the first magnetic field B̅ on. This allows to solidify the photocurable resin while freezing at the same time the self-assembled and oriented magneto-responsive fillers. The duration of the step 204 of consolidating the precursor material depends on many factors, such as the reactivity of the photocurable resin, the light shielding effect of the fillers, the degree of curing required, etc. During the consolidation, the radiation source is appropriately positioned to illuminate the precursor material situated on a deposition zone 121, that corresponds to a vat for DLP printer apparatuses, a building platform for DIW apparatuses, and a microscope slide for 2PP apparatuses.

The method 200 comprises a decision step 205 depending on the number of printed layers (or slices) calculated by a software of the computer.

If the number of printed layers corresponds to the composite part, the printing process is completed, the method 200 comprises a step 206 of post processing. The post-processing may include, but is not limited to, a washing step, a post-curing or other treatments involving the printed composite part.

If the number of printed layers does not correspond to the composite part, the printing process is not completed, the steps 201, 202, 203 and 204 are repeated until the entire composite part is printed.

The following examples illustrate the evolution of the fillers formed by Fe₃O₄ nanoparticles embedded within a photocurable liquid resin (non-represented) and poured in the deposition zone 121 for different configurations of the applied homogeneous magnetic field B = B̅_̅{̅x̅,̅y̅}̅(α, β) + B̅_̅{̅z̅}̅(Ψ), during the step 203 of the method 200.

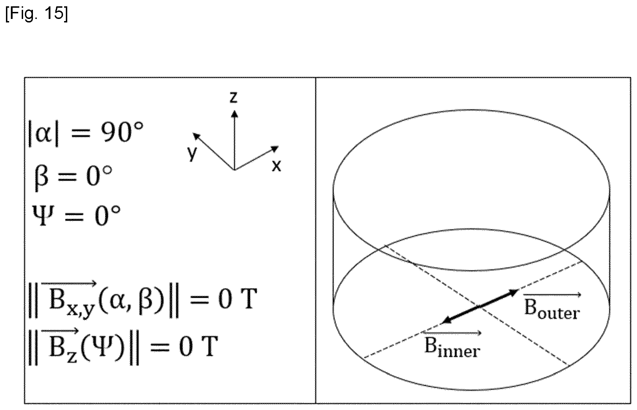

In Figures 15, 16, 17, 18, 19, and 20, the values of β and ∥B̅_̅{̅z̅}̅(Ψ)∥ are constant, with β = 0° and ∥B_{z}(Ψ)∥ = 0 T, while the value of | α | varies in the range 0° to 90°.
for the sake of clarity, B̅_̅{̅x̅,̅y̅}̅(α, β) will be referred to as B̅_̅{̅x̅,̅y̅}̅ in Figures 15, 17 and 19.

Figure 15 illustrates an embodiment where the applied magnetic field B̅ has an intensity ∥̅B̅∥ equal to 0 T. This field configuration is obtained by imposing the following condition for B̅_̅{̅x̅,̅y̅}̅(α, β) : | α | is equal to 90°.

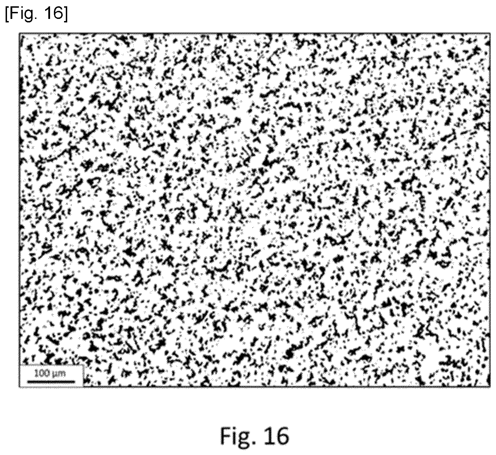

Figure 16 shows that for ∥B̅∥ = ∥ B̅_̅{̅x̅,̅y̅}̅(*α*, *β*)∥ equal to 0 T, the magneto-responsive fillers (Fe₃O₄ nanoparticles) are stable and that neither self-assembly nor alignment processes occur.

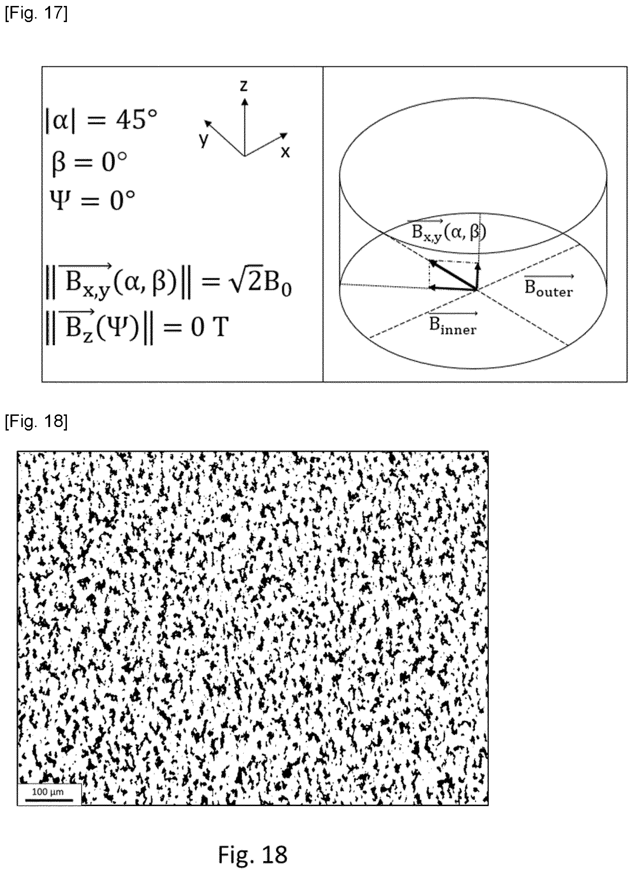

Figure 17 illustrates an embodiment where the applied magnetic field B̅ has an intensity ∥B̅∥ = ∥ B̅_̅{̅x̅,̅y̅}̅(*α*, *β*)∥ equal to $\sqrt{2} {B}_{0}$ and a spatial direction aligned along the Y-axis. This field configuration is generated by imposing the following condition for B̅_̅{̅x̅,̅y̅}̅(α, β) : | α | is equal to 45°.

Figure 18 shows that for $\left‖\vec{B}\right‖ = \left‖\vec{{B}_{x , y}}\left(α, β\right)\right‖ = \sqrt{2} {B}_{0}$ the magneto-responsive fillers start to form chain-like structures aligned along the Y-axis in agreement with Figure 17.

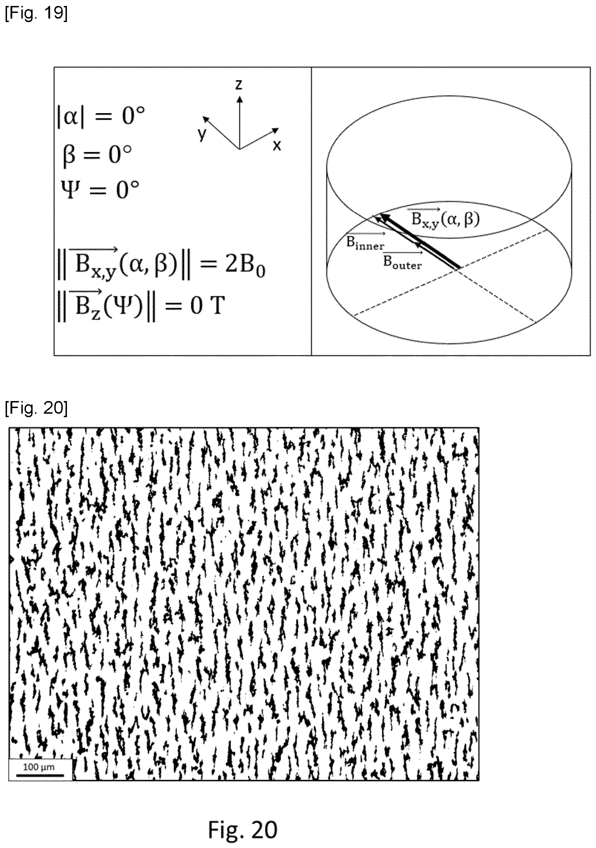

Figure 19 illustrates an embodiment where the applied magnetic field B̅ has an intensity ∥B̅∥ = ∥B̅_̅{̅x̅,̅y̅}̅(α, β)∥ equal to 2B₀ and a spatial direction aligned along the Y-axis. This field configuration is generated by imposing the following condition for B̅_̅{̅x̅,̅y̅}̅(*α, β*): | α | is equal to 0°.

Figure 20 shows that for ∥B̅∥ = ∥ B̅_̅{̅x̅,̅y̅}̅(α, *β*) ∥ equal to = 2B₀, the magneto-responsive fillers form chain-like structures aligned along the Y-axis in agreement with Figure 19. Moreover, as the applied magnetic field is larger, the chain-like structures are longer and more defined than in Figure 18.

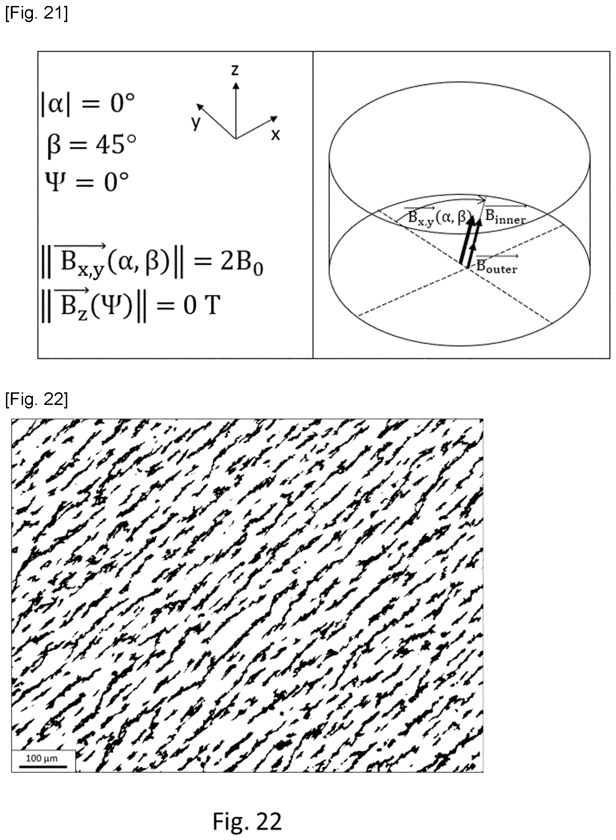

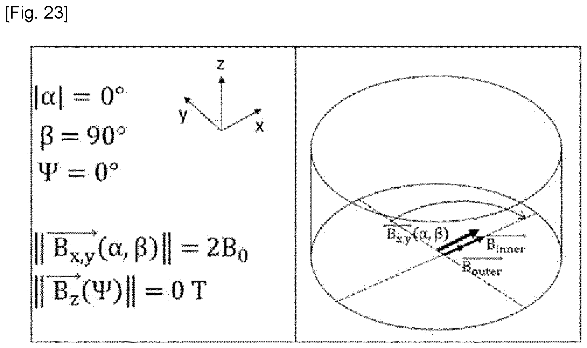

In Figures 21, 22, 23, 24 the values of the angle α and the intensity ∥B̅_̅{̅z̅}̅(Ψ)∥ are constant, with α equal to 0° and the intensity ∥B̅_̅{̅z̅}̅(Ψ)∥ equal to 0 T, while the value of β varies in the range 0° to 90°. In this case, the applied magnetic field B̅ has an intensity ∥B̅∥ = ∥ B̅_̅{̅x̅,̅y̅}̅(α, β)∥ equal to 2B₀. In particular, in the Figures, the notation φ corresponds to the azimuthal angle Ψ.
for the sake of clarity, B̅_̅{̅x̅,̅y̅}̅(α, β) will be referred to as B̅_̅{̅x̅,̅y̅}̅ in Figures 21 and 23.

Figure 21 illustrates an embodiment where the angle β between the direction of the applied magnetic field B = B̅_̅{̅x̅,̅y̅}̅(α, β) and the Y-axis is equal to 45°.

Figure 22 shows the rotation of the magneto-responsive fillers, self-assembled in chain-like structures, by an angle β of 45° with respect to the configuration of Figure 20.

Figure 23 illustrates an embodiment where the angle β between the direction of the applied magnetic field B̅ = B̅_̅{̅x̅,̅y̅}̅(α, β) and the Y-axis is equal to 90°.

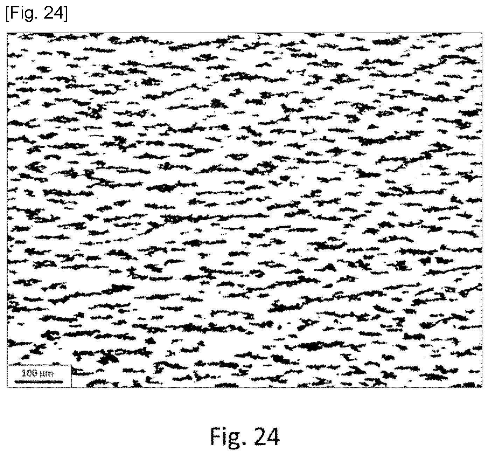

Figure 24 shows the rotation of the magneto-responsive fillers, self-assembled in chain-like structures, by an angle β of 90° with respect to the configuration of the Figure 20.

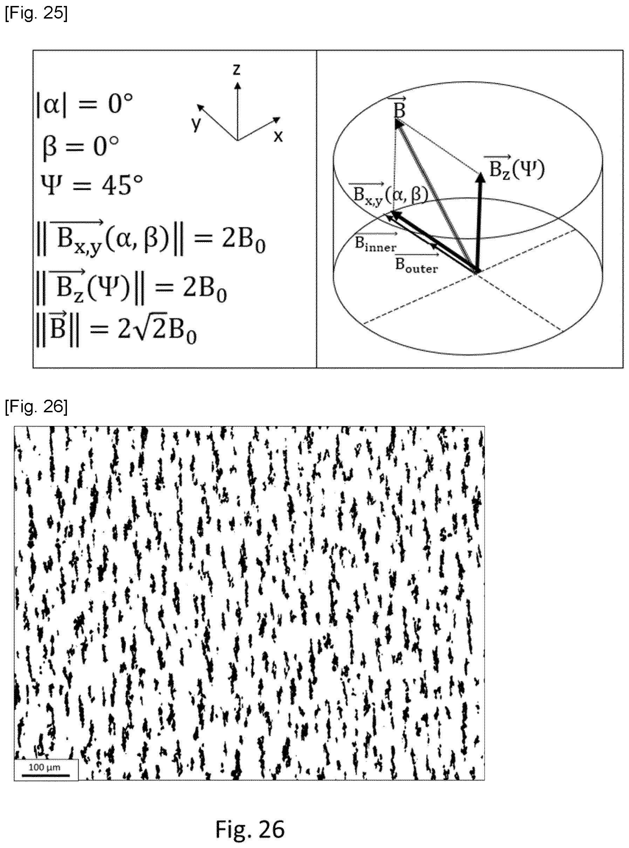

In Figures 25, 26, 27, 28, 29, and 30 the magnetic field has a non-null component along the Z-axis, meaning that ∥B̅_̅{̅z̅}̅(Ψ)∥ is different from 0 T and the value of β is constant, with β equal to 0°, while the value of | α | varies in the range 0° to 90°.

Figure 25 illustrates an embodiment where the applied magnetic field B̅ has an intensity ∥B̅∥ = ∥ B̅_̅{̅x̅,̅y̅}̅(*α*, *β*) + B̅_̅{̅z̅}̅(Ψ)∥ equal to $2 \sqrt{2} {B}_{0}$ and it has a three-dimensional spatial direction oriented at an angle Ψ of 45° with respect to the XY-plane. This field configuration is generated by imposing the following conditions for B̅_̅{̅x̅,̅y̅}̅(*α*, *β*) and B̅_̅{̅z̅}̅(Ψ): | α | is equal to 0° and ∥B̅_̅{̅z̅}̅(Ψ)∥ =2B₀.

Figure 26 illustrates the rotation of self-assembled magneto-responsive fillers, arranged in chain-like structures, in the YZ-plane compared to the configuration depicted in Figure 20, where the fillers were aligned along the Y-axis. This rotation is experimentally observed through the reduction of the projection of the lengths of the chain-like structures in the plane of observation of the microscope, specifically, the XY-plane.

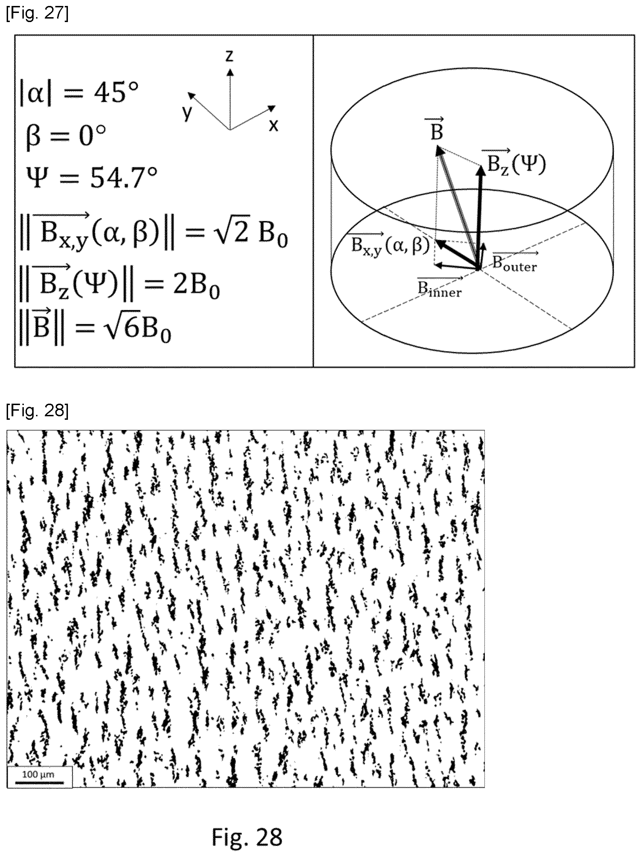

Figure 27 illustrates the configuration where the applied magnetic field B̅ has an intensity ∥B̅∥ = ∥ B̅_̅{̅x̅,̅y̅}̅(α, β) + B̅_̅{̅z̅}̅(Ψ)∥ equal to $\sqrt{6} {B}_{0}$ and spatial direction oriented at an angle Ψ of 54.7° with respect to the XY-plane. This field configuration is generated by imposing the following conditions for B̅_̅{̅x̅,̅y̅}̅(α, β) and B̅_̅{̅z̅}̅(Ψ): | α | equal to 45° and ∥B̅_̅{̅z̅}̅(Ψ)∥ equal to 2B₀.

Figure 28 illustrates the further rotation of self-assembled magneto-responsive fillers, arranged in chain-like structures, in the YZ-plane compared to the configuration depicted in the Figure 27. This rotation is experimentally observed through the further reduction of the projection of the lengths of the chain-like structures in the plane of observation of the microscope, specifically, the XY-plane.

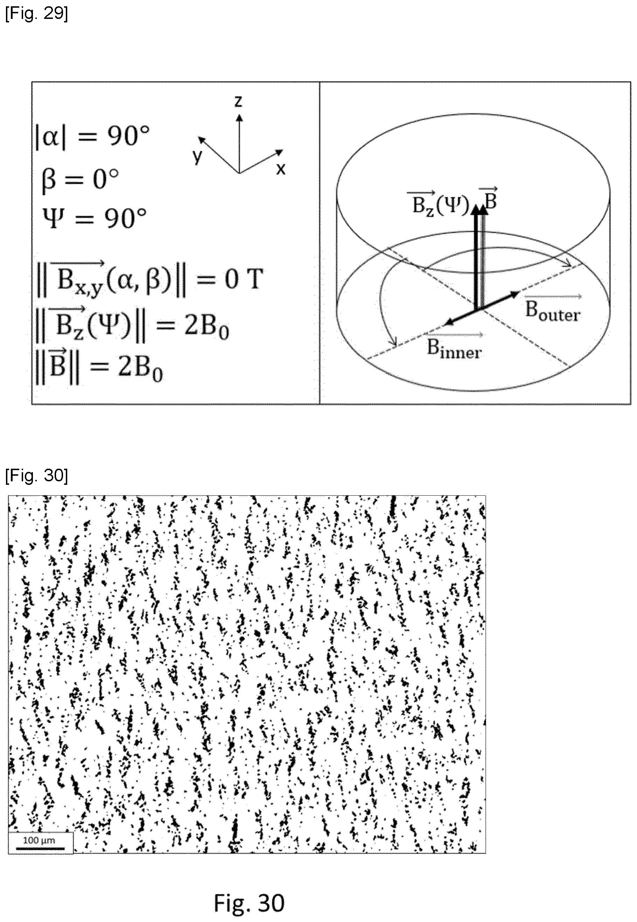

Figure 29 illustrates an embodiment where the applied magnetic field B̅ has an intensity ∥B̅∥ = ∥B̅_̅{̅z̅}̅(Ψ)∥ equal to 2B₀ and has a spatial direction oriented along the Z-axis (Ψ=90°). This field configuration is generated by imposing the following conditions for B̅_̅{̅x̅,̅y̅}̅(α, β) and B̅_̅{̅z̅}̅(Ψ): | α | is equal to 90° and ∥B̅_̅{̅z̅}̅(Ψ)∥ is equal to 2B₀.

Figure 30 shows the projection of the chain-like structures of magneto-responsive fillers aligned along the Z-axis and thus having an alignment normal to the observation plane (the XY-plane). Thus, the chain-like structures are visualized as doted spots on the image.

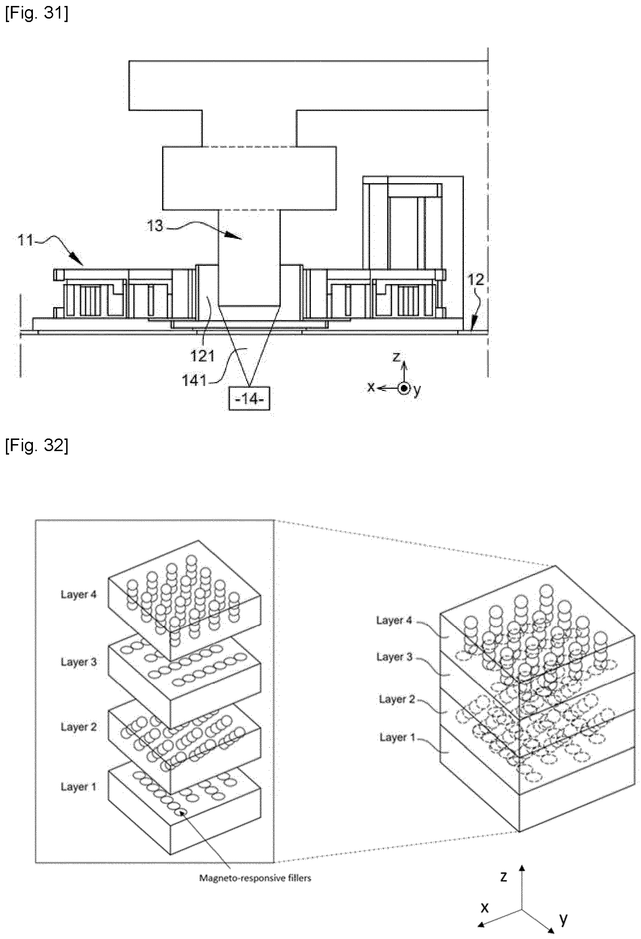

Figure 31 is a side view of the magnetic device 11 mounted on a **DLP** printer apparatus as shown in the Figure 1, in the XZ-plane during the step 204 of consolidation, wherein the radiation source 14 emits a light beam 141 into a first layer of precursor material while the first magnetic field B̅ is kept on within the deposition zone 121.

Figure 32 illustrates an example of the spatial distribution and direction of the magneto-responsive fillers inside four layers (layer 1, layer 2, layer 3 and layer 4) of a consolidated composite matrix.

## Claims

1. A magnetic device (11) configured to generate a homogeneous magnetic field B̅ in a specific zone (115), the magnetic field B̅ having spatial components Bₓ, B_{y} and B_{z} along respectively X, Y and Z axes of a Cartesian reference frame, said magnetic field B̅ being adjustable in intensity ∥B̅∥ and three-dimensional spatial direction, the magnetic device (11) is adapted to be installed on additive manufacturing apparatuses enabling a magnetically-assisted three-dimensional printing of composite elements, the magnetic device (11) comprising:
∘ an inner (111) and an outer (112) nested concentric Halbach cylinder arrays sharing a common revolution axis oriented along the Z-axis, each of said inner (111) and outer (112) Halbach cylinder arrays generating a homogeneous magnetic field with an equal intensity B₀, the inner (111) and outer (112) Halbach cylinder arrays allow generating a resulting magnetic field B̅_̅{̅x̅,̅y̅}̅(α, (β) in the XY-plane with spatial components Bₓ and B_{y}, the inner (111) and outer (112) Halbach cylinder arrays being mounted to rotate jointly or in opposite angular directions around their common revolution axis in order to achieve adjustability of both intensity and spatial direction of the resulting magnetic field B̅_̅{̅x̅,̅y̅}̅(α, β) in the XY-plane;
∘ a solenoid (113) positioned within a core of the inner Halbach cylinder array (111), and having a revolution axis aligned with the common revolution axis of the inner (111) and outer (112) Halbach cylinder arrays, the solenoid (113) generating and adjusting a magnetic field B̅_̅{̅z̅}̅ of spatial component B_{z} along the Z-axis,
the specific zone (115) being located in a core of the solenoid (113) wherein the homogeneous magnetic field B̅ is applied.

2. The magnetic device (11) of the preceding claim wherein, the inner Halbach cylinder array (111) is configured to generate a magnetic field having a spatial direction in the XY-plane and the outer Halbach cylinder array (112) is configured to generate a magnetic field having a spatial direction in the XY-plane, the magnetic device (11) being such that:
- the inner Halbach cylinder array (111) is arranged to be rotated anticlockwise around its revolution axis in order to rotate the direction of its magnetic field by an angle - α from the Y-axis, and
- the outer Halbach cylinder array (112) is arranged to be rotated clockwise around its revolution axis in order to rotate the direction of its magnetic field by an angle α from the Y-axis, α being comprised between 0° and 90°, and,
in order to adjust the intensity ∥̅B̅_̅{̅x̅,̅y̅}̅(α, β)∥
the maximum intensity of the resulting magnetic field ∥̅B̅_̅{̅x̅,̅y̅}̅(α, β)∥ is obtained for α equal to 0° and corresponds to 2B₀, i.e., when the directions of the magnetic fields generated by the inner (111) and outer (112) Halbach cylinder arrays are collinear and parallel,
and the minimum intensity of ∥B̅_̅{̅x̅,̅y̅}̅(α, β)∥ is obtained for α equal to 90° and is equal to 0 T, i.e., when the directions of the magnetic fields generated by the inner (111) and outer (112) Halbach cylinder arrays are collinear and antiparallel.

3. The magnetic device (11) of the preceding claim wherein the inner (111) and outer (112) Halbach cylinder arrays are arranged to be jointly rotated around their common revolution axis, such that the direction of B̅_̅{̅x̅,̅y̅}̅(α, β) is rotated of an angle β from the Y-axis comprised in the range 0° to 360°.

4. The magnetic device (11) of one of the preceding claims wherein a diameter of a core of the solenoid is comprised between 1 mm and 500 mm.

5. Three-dimensional printer apparatus (1) for manufacturing a composite part assisted by a homogeneous magnetic field B, the three-dimensional printer apparatus (1) comprising:
- the magnetic device (11) according to one of the preceding claims, the magnetic device (11) generating the magnetic field B̅ adjustable in both intensity and three-dimensional spatial direction;
- a deposition zone (121) adapted to receive a precursor material, the deposition zone (121) being located in the XY-plane of the Cartesian reference frame within the specific zone (115) located in the core of the solenoid (113) wherein the homogeneous magnetic field B̅ is applied.

6. The three-dimensional printer apparatus (1) of the preceding claim including a support platform (12) comprising a first stepper motor (12b) and a second stepper motor (12b'), such that a rotation of the inner (111) and outer (112) Halbach cylinder arrays are controlled by the first (12b) and second (12b') motor, respectively.

7. The three-dimensional printer apparatus (1) of one of the claims 5 to 6 wherein the deposition zone (121) is a vat, a microscope slide or a building platform.

8. The three-dimensional printer apparatus (1) of one of the claims 5 to 7 comprising a precursor material disposed within the deposition zone (121).

9. The three-dimensional printer apparatus (1) of one of the claims 5 to 8 comprising a radiation source (14) configured to apply a radiation (141) on the precursor material disposed within the deposition zone (121).

10. The three-dimensional printer apparatus of one of the claims 5 to 9 wherein the three-dimensional printer apparatus (1) is a digital light processing apparatus, a direct-ink-writing apparatus or a two-photon polymerization apparatus.

11. The three-dimensional printer apparatus of one the claims 9 and 10, wherein the three-dimensional printer apparatus is a digital light processing apparatus and the radiation is applied on the support platform (12) from below the magnetic device (11).

12. The three-dimensional printer apparatus (1) of one of the claims 5 to 11 wherein the precursor material comprises a polymeric resin embedding magneto-responsive fillers.

13. A method (200) for manufacturing a composite part assisted by homogeneous magnetic field defined along X, Y and Z axes of a Cartesian reference frame and adjustable in intensity and three-dimensional spatial direction, the magnetic field being generated by a magnetic device comprising an inner (111) and an outer (112) nested concentric Halbach cylinder arrays sharing a common revolution axis aligned along the Z-axis, each of said inner and outer Halbach cylinder arrays generating a homogeneous magnetic field of equal intensity B₀, both the inner and outer Halbach cylinder arrays being mounted to rotate jointly or in opposite angular directions around their common revolution axis, the magnetic device (11) also comprising a solenoid (113) inserted in a core of the inner Halbach cylinder array (111) and having a revolution axis aligned along the common revolution axis of the inner (111) and outer (112) Halbach cylinder arrays, the solenoid (113) generating and tuning a magnetic field B̅_̅{̅z̅}̅ of spatial component B_{z} along the Z-axis, the magnetic field generated by the magnetic device (11) being applied to a specific zone (115) located inside the core of the solenoid (113), the method (200) comprising:
(a) feeding (201) a deposition zone (121) with a precursor material comprising a photocurable resin and magneto-responsive fillers, the deposition zone (121) being disposed in the XY-plane within the specific zone (115) located in the core of the magnetic device (11),
(b) generating (202) a homogeneous magnetic field B̅ within the deposition zone (121) by the magnetic device (11), B comprising spatial components Bₓ, B_{y} and B_{z} along respectively the X, Y and Z-axes and having a desired intensity ∥B̅∥ and a desired three-dimensional spatial direction, the generation of B̅ comprising the generation of a homogeneous magnetic field B̅_̅{̅x̅,̅y̅}̅(α, β) of spatial components Bₓ and B_{y} and of adjustable intensity ∥B̅_̅{̅x̅,̅y̅}̅(α, β)∥ and spatial direction in the XY-plane, the generation of B̅_̅{̅x̅,̅y̅}̅ comprising :
∘ rotating the outer Halbach cylinder array cylinder (112) around its revolution axis of an angle α from the Y-axis,
∘ rotating the inner Halbach cylinder (111) around its revolution axis of an angle - α from the Y-axis,
∘ rotating jointly the inner (111) and outer (112) Halbach cylinder arrays around their same revolution axis of an angle β from the Y-axis to rotate the direction of B̅_̅{̅x̅,̅y̅}̅(α, β) of the angle β from the Y-axis, such that the spatial direction of B̅_̅{̅x̅,̅y̅}̅(α, β) in the XY-plane is the desired spatial direction,
the generation of B̅ also comprising the generation of a homogeneous magnetic field B̅_̅{̅z̅}̅ of spatial component B_{z} along the Z-axis, the generation of B̅_̅{̅z̅}̅ comprising:
∘ injecting an adjustable electric current into the solenoid (113) such that the spatial direction of the magnetic field B̅ with respect to the XY-plane is given by an azimuthal angle Ψ and the desired intensity ∥B̅∥ is equal to $\sqrt{{\left‖\vec{{B}_{x , y}}\left(α, β\right)\right‖}^{2} + {\left‖\vec{{B}_{z}}\left(Ψ\right)\right‖}^{2}}$*,*
(c) orienting (203) the magneto-responsive fillers in a first alignment with the first magnetic field B̅;
(d) consolidating (204) the precursor material with the magneto-responsive fillers held in the first alignment.

14. The method of the preceding claim wherein:
- If the composite part is fabricated, the method comprises:
(e) post-processing (206) the composite part,
- Otherwise, the method comprises :
(f) repeating steps (a) to (d) until the composite part is obtained.

15. The method (200) of one of the claims 13 to 14 wherein each consolidating step is realized with a radiation source.

16. The method (200) of one of the claims 13 to 15 wherein in step (d), the precursor material is partially or fully cured.

## Patentansprüche

1. Magnetische Vorrichtung (11), die so ausgelegt ist, dass sie in einem bestimmten Bereich (115) ein homogenes Magnetfeld B̅ erzeugt, wobei das Magnetfeld B räumliche Komponenten Bₓ, B_{y} und B_{z} entlang der X-, Y- bzw. Z-Achse eines kartesischen Koordinatensystems aufweist und das Magnetfeld B̅ in seiner Intensität ∥B̅∥ und in seiner dreidimensionalen räumlichen Richtung einstellbar ist, wobei die magnetische Vorrichtung (11) dazu ausgelegt ist, an Geräten der additiven Fertigung installiert zu werden, die einen magnetisch unterstützten dreidimensionalen Druck von Verbundelementen ermöglichen, wobei die magnetische Vorrichtung (11) umfasst:
∘ Anordnungen von ineinander verschachtelten konzentrischen Halbach-Zylindern, einem inneren (111) und einem äußeren (112), die eine gemeinsame, entlang der Z-Achse ausgerichtete Drehachse teilen, wobei jede der Anordnungen von inneren (111) und äußeren (112) Halbach-Zylindern ein homogenes Magnetfeld mit gleicher Intensität B₀ erzeugt und die inneren (111) und die äußeren (112) Halbach-Zylinder-Anordnungen ein resultierendes Magnetfeld B̅_̅{̅x̅,̅y̅}̅(α, β) in der XY-Ebene mit den räumlichen Komponenten Bₓ und B_{y} erzeugen, wobei die inneren (111) und äußeren (112) Halbach-Zylinder-Anordnungen so angeordnet sind, dass sie sich gemeinsam oder in entgegengesetzten Winkelrichtungen um ihre gemeinsame Drehachse drehen können, um sowohl die Intensität als auch die räumliche Richtung des resultierenden Magnetfelds B̅_̅{̅x̅,̅y̅}̅(α, β) in der XY-Ebene anzupassen;
∘ ein Magnetventil (113), das innerhalb eines Kerns der inneren Halbach-Zylinder-Anordnung (111) angeordnet ist und dessen Drehachse mit der gemeinsamen Drehachse der inneren (111) und der äußeren (112) Halbach-Zylinder-Anordnung fluchtet, wobei das Magnetventil (113) ein Magnetfeld B̅_̅{̅z̅}̅ mit der räumlichen Komponente B_{z} entlang der Z-Achse erzeugt und steuert,
wobei sich der spezifische Bereich (115) in einem Kern des Magnetventils (113) befindet, in dem das homogene Magnetfeld B anliegt.

2. Magnetische Vorrichtung (11) nach dem vorstehenden Anspruch, bei der die innere Halbach-Zylinder-Anordnung (111) so ausgelegt ist, dass sie ein Magnetfeld mit einer räumlichen Richtung in der XY-Ebene erzeugt, und die äußere Halbach-Zylinder-Anordnung (112) so ausgelegt ist, dass sie ein Magnetfeld mit einer räumlichen Richtung in der XY-Ebene erzeugt, wobei die magnetische Vorrichtung (11) derart ausgebildet ist, dass:
- die innere Halbach-Zylinder-Anordnung (111) so angeordnet ist, dass sie sich gegen den Uhrzeigersinn um ihre Drehachse dreht, um die Richtung ihres Magnetfelds um einen Winkel von -α relativ zur Y-Achse zu drehen, und
- die äußere Halbach-Zylinder-Anordnung (112) so angeordnet ist, dass sie sich im Uhrzeigersinn um ihre Drehachse dreht, um die Richtung ihres Magnetfelds um einen Winkel α relativ zur Y-Achse zu drehen, wobei α zwischen 0° und 90° liegt, und
um die Intensität ∥B̅_̅{̅x̅,̅y̅}̅(α, β)∥ anzupassen,
wird die maximale Intensität des resultierenden Magnetfelds ∥̅B̅_̅{̅x̅,̅y̅}̅(α, β)∥ bei einem Winkel α von 0° erreicht und entspricht 2B₀, d. h. wenn die Richtungen der von den inneren (111) und äußeren (112) Halbach-Zylinder-Anordnungen erzeugten Magnetfelder kollinear und parallel sind,
und die minimale Intensität von ∥B̅_̅{̅x̅,̅y̅}̅(α, β)∥ wird bei einem Winkel α von 90° erreicht und beträgt 0 T, d. h. wenn die Richtungen der Magnetfelder, die von den inneren (111) und äußeren (112) Halbach-Zylinder-Anordnungen erzeugt werden, kollinear und antiparallel sind.

3. Magnetische Vorrichtung (11) nach dem vorstehenden Anspruch, bei der die inneren (111) und äußeren (112) Halbach-Zylinder-Anordnungen so angeordnet sind, dass sie sich gemeinsam um ihre gemeinsame Drehachse drehen, und zwar so, dass die Richtung B̅_̅{̅x̅,̅y̅}̅(α, β) um einen Winkel β gegenüber der Y-Achse gedreht ist, der im Bereich von 0° bis 360° liegt.

4. Magnetische Vorrichtung (11) nach einem der vorstehenden Ansprüche, bei der der Durchmesser des Magnetventilkerns zwischen 1 mm und 500 mm liegt.

5. 3D-Druckvorrichtung (1) zur Herstellung eines Verbundteils unter Zuhilfenahme eines homogenen Magnetfelds B̅, wobei die 3D-Druckvorrichtung (1) umfasst:
- die magnetische Vorrichtung (11) nach einem der vorstehenden Ansprüche, wobei die magnetische Vorrichtung (11) das Magnetfeld B̅ erzeugt, das sowohl in seiner Intensität als auch in seiner dreidimensionalen räumlichen Richtung anpassbar ist;
- einen Ablagerungsbereich (121), der zur Aufnahme eines Vorläufermaterials ausgelegt ist, wobei sich der Ablagerungsbereich (121) in der XY-Ebene des kartesischen Koordinatensystems innerhalb des spezifischen Bereichs (115) im Kern des Magnetventils (113) befindet, in dem das homogene Magnetfeld B̅ angelegt wird.

6. 3D-Druckvorrichtung (1) nach dem vorstehenden Anspruch, umfassend eine Trägerplattform (12) mit einem ersten Schrittmotor (12b) und einem zweiten Schrittmotor (12b'), sodass eine Drehung der inneren (111) und der äußeren (112) Halbach-Zylinder-Anordnung jeweils durch den ersten (12b) bzw. den zweiten (12b') Schrittmotor gesteuert wird.

7. 3D-Druckvorrichtung (1) nach einem der Ansprüche 5 und 6, bei der der Ablagerungsbereich (121) ein Behälter, ein Mikroskopobjektträger oder eine Bauplattform ist.

8. 3D-Druckvorrichtung (1) nach einem der Ansprüche 5 bis 7, die ein im Ablagerungsbereich (121) angeordnetes Vorläufermaterial umfasst.

9. 3D-Druckvorrichtung (1) nach einem der Ansprüche 5 bis 8, eine Strahlungsquelle (14) umfassend, die so ausgelegt ist, dass sie eine Strahlung (141) auf das in dem Ablagerungsbereich (121) angeordnete Vorläufermaterial richtet.

10. 3D-Druckvorrichtung nach einem der Ansprüche 5 bis 9, bei der die 3D-Druckvorrichtung (1) eine digitale Lichtverarbeitungsvorrichtung, eine Direkt-Tintenstrahlvorrichtung oder eine Zwei-Photonen-Polymerisationsvorrichtung ist.

11. 3D-Druckvorrichtung nach einem der Ansprüche 9 und 10, bei der die 3D-Druckvorrichtung eine digitale Lichtverarbeitungsvorrichtung ist und die Strahlung von der Unterseite der magnetischen Vorrichtung (11) auf die Trägerplattform (12) gerichtet wird.

12. 3D-Druckvorrichtung (1) nach einem der Ansprüche 5 bis 11, bei der das Vorläufermaterial ein Polymerharz umfasst, das magnetisch empfindliche Füllstoffe enthält.

13. Verfahren (200) zur Herstellung eines Verbundwerkstoffteils unter Zuhilfenahme eines homogenen Magnetfelds, das entlang der X-, Y- und Z-Achsen eines kartesischen Koordinatensystems definiert und in seiner Intensität sowie in seiner dreidimensionalen räumlichen Richtung anpassbar ist, wobei das Magnetfeld von einer magnetischen Vorrichtung erzeugt wird, die eine innere (111) und ein äußere (112) ineinander geschachtelte, konzentrische Halbach-Zylinder-Anordnung umfasst, die eine gemeinsame, entlang der Z-Achse ausgerichtete Drehachse teilen, wobei jede der inneren und äußeren Halbach-Zylinder-Anordnung ein homogenes Magnetfeld gleicher Stärke B₀ erzeugt, wobei sowohl die innere als auch die äußere Halbach-Zylinder-Anordnung so angeordnet sind, dass sie sich gemeinsam oder in entgegengesetzten Winkelrichtungen um ihre gemeinsame Drehachse drehen können, wobei die magnetische Vorrichtung (11) außerdem ein Magnetventil (113) umfasst, das in einen Kern der inneren Halbach-Zylinder-Anordnung (111) eingesetzt ist und eine Drehachse aufweist, die entlang der gemeinsamen Drehachse der inneren (111) und der äußeren (112) Halbach-Zylinder-Anordnung ausgerichtet ist, wobei das Magnetventil (113) ein Magnetfeld B̅_̅{̅z̅}̅ mit der räumlichen Komponente B_{z} entlang der Z-Achse erzeugt und abstimmt, wobei das von der magnetischen Vorrichtung (11) erzeugte Magnetfeld auf einen spezifischen Bereich (115) innerhalb des Kerns des Magnetventils (113) angewendet wird, wobei das Verfahren (200) umfasst:
(a) das Zuführen (201) eines Vorläufermaterials, das ein lichthärtbares Harz und magnetisch empfindliche Füllstoffe umfasst, in einem Abscheidungsbereich (121), der in der XY-Ebene innerhalb des spezifischen Bereichs (115) im Kern der magnetischen Vorrichtung (11) angeordnet ist,
(b) das Erzeugen (202) eines homogenen Magnetfelds B̅ innerhalb des Abscheidungsbereichs (121) mithilfe der magnetischen Vorrichtung (11), wobei B̅ die räumlichen Komponenten Bₓ, B_{y} und B_{z} entlang der X-, Y- bzw. Z-Achse umfasst und eine gewünschte Intensität ∥B̅∥ sowie eine gewünschte dreidimensionale räumliche Richtung aufweist, wobei das Erzeugen von B̅ die Erzeugung eines homogenen Magnetfelds B̅_̅{̅x̅,̅y̅}̅(α, β ) mit den räumlichen Komponenten Bₓ und B_{y} sowie einer anpassbaren Intensität ∥B̅_̅{̅x̅,̅y̅}̅(α, β)∥ und einer in der XY-Ebene anpassbaren räumlichen Richtung umfasst, wobei die Erzeugung von B̅_̅{̅x̅,̅y̅}̅ Folgendes umfasst:
∘ die Drehung der äußeren Halbach-Zylinder-Anordnung (112) um ihre Drehachse um einen Winkel α relativ zur Y-Achse,
∘ die Drehung der inneren Halbach-Zylinder-Anordnung (111) um ihre Drehachse um einen Winkel -α relativ zur Y-Achse,
∘ die gemeinsame Drehung der inneren (111) und der äußeren (112) Halbach-Zylinder-Anordnung um dieselbe Drehachse um einen Winkel β relativ zur Y-Achse, um die Richtung von B̅_̅{̅x̅,̅y̅}̅(α, β) um einen Winkel β relativ zur Y-Achse zu drehen, sodass die räumliche Richtung von B̅_̅{̅x̅,̅y̅}̅(α, β) in der XY-Ebene die gewünschte räumliche Richtung ist,
wobei die Erzeugung von B̅ auch die Erzeugung eines homogenen Magnetfelds B̅_̅{̅z̅}̅ mit der räumlichen Komponente B_{z} entlang der Z-Achse umfasst und die Erzeugung von B̅_̅{̅z̅}̅ Folgendes umfasst:
∘ das Einspeisen eines anpassbaren elektrischen Stroms in das Magnetventil (113) derart, dass die räumliche Richtung des Magnetfelds B̅ relativ zur XY-Ebene durch einen Azimutwinkel Ψ gegeben ist und dass die gewünschte Intensität ∥B̅∥ gleich $\sqrt{{\left‖\vec{{B}_{x , y}}\left(α, β\right)\right‖}^{2} + {\left‖\vec{{B}_{z}}\left(Ψ\right)\right‖}^{2}}$ ist
(c) das Ausrichten (203) der magnetisch empfindlichen Füllstoffe entlang einer ersten Ausrichtung mit dem ersten Magnetfeld B̅;
(d) das Verfestigen (204) des Vorläufermaterials, wobei die magnetisch empfindlichen Füllstoffe in der ersten Ausrichtung gehalten werden.

14. Verfahren nach dem vorstehenden Anspruch, bei dem:
- wenn das Verbundteil hergestellt wird, das Verfahren umfasst:
(e) die Nachbehandlung (206) des Verbundteils,
- ansonsten umfasst das Verfahren:
(f) die Wiederholung der Schritte (a) bis (d), bis das Verbundteil erhalten wird.

15. Verfahren (200) nach einem der Ansprüche 13 und 14, bei dem jeder Verfestigungsschritt mit einer Strahlungsquelle durchgeführt wird.

16. Verfahren (200) nach einem der Ansprüche 13 bis 15, bei dem in Schritt (d) das Vorläufermaterial teilweise oder vollständig ausgehärtet wird.

## Revendications

1. Dispositif magnétique (11) configuré pour générer un champ magnétique homogène B̅ dans une zone spécifique (115), le champ magnétique B ayant des composantes spatiales Bₓ, B_{y} et B_{z} respectivement le long des axes X, Y et Z d'un repère cartésien, ledit champ magnétique B étant ajustable en intensité ∥B̅∥ et en direction spatiale tridimensionnelle, le dispositif magnétique (11) est adapté pour être installé sur des appareils de fabrication additive permettant une impression tridimensionnelle assistée magnétiquement d'éléments composites, le dispositif magnétique (11) comprenant :
∘ Deux réseaux de cylindres de Halbach concentriques imbriqués, l'un intérieur (111) et l'autre extérieur (112), partageant un axe de révolution commun orienté selon l'axe Z, chaque réseau générant un champ magnétique homogène d'intensité égale B₀, les réseaux permettent de générer un champ magnétique résultant B̅_̅{̅x̅,̅y̅}̅(α, β) dans le plan XY, avec les composantes spatiales sont Bₓ et B_{γ}, les réseaux intérieur (111) et extérieur (112) étant montés de manière à tourner ensemble ou en sens inverse autour de leur axe de révolution commun afin de permettre le réglage de l'intensité et de la direction spatiale du champ magnétique résultant B̅_̅{̅x̅,̅y̅}̅(α, β)dans le plan XY ;
∘ un solénoïde (113) positionné à l'intérieur d'un noyau du réseau de cylindres de Halbach intérieur (111), et ayant un axe de révolution aligné avec l'axe de révolution commun des réseaux de cylindres de Halbach intérieur (111) et extérieur (112), le solénoïde (113) générant et ajustant un champ magnétique B̅_̅{̅z̅}̅de composante spatiale B _{z} le long de l'axe Z,
la zone spécifique (115) étant située dans un noyau du solénoïde (113) dans lequel le champ magnétique homogène B̅ est appliqué.

2. Le dispositif magnétique (11) selon la revendication précédente dans lequel le réseau de cylindres de Halbach intérieur (111) est configuré pour générer un champ magnétique ayant une direction spatiale dans le plan XY et le réseau de cylindres de Halbach extérieur (112) est configuré pour générer un champ magnétique ayant une direction spatiale dans le plan XY, le dispositif magnétique (11) étant tel que :
- Le réseau de cylindres de Halbach intérieur (111) est agencé pour tourner dans le sens antihoraire autour de son axe de révolution afin de tourner la direction de son champ magnétique d'un angle -α par rapport à l'axe Y, et
- le réseau cylindrique extérieur de Halbach (112) est agencé pour être tourné dans le sens horaire autour de son axe de révolution afin de faire tourner la direction de son champ magnétique d'un angle α par rapport à l'axe Y, α étant compris entre 0° et 90°, et,
afin d'ajuster l'intensité ∥B̅_̅{̅x̅,̅y̅}̅(α, β)∥,
l'intensité maximale du champ magnétique résultant ∥B̅_̅{̅x̅,̅y̅}̅(α, β)∥ est obtenue pour α égal à 0° et correspond à 2 B₀, c'est-à-dire lorsque les directions des champs magnétiques générés par les réseaux de cylindres de Halbach intérieurs (111) et extérieurs (112) sont colinéaires et parallèles,
et l'intensité minimale de ∥B̅_̅{̅x̅,̅y̅}̅(α, β)∥ est obtenue pour α égal à 90° et est égal à 0 T, c'est-à-dire lorsque les directions des champs magnétiques générés par les réseaux de cylindres de Halbach internes (111) et externes (112) sont colinéaires et antiparallèles.

3. Le dispositif magnétique (11) selon la revendication précédente dans lequel les réseaux de cylindres de Halbach intérieur (111) et extérieur (112) sont disposés de manière à être tournés conjointement autour de leur axe de révolution commun, de sorte que la direction de B̅_̅{̅x̅,̅y̅}̅(α, β) soit tournée d'un angle β par rapport à l'axe Y compris dans la plage de 0° à 360°.

4. Le dispositif magnétique (11) selon l'une des revendications précédentes dans lequel le diamètre d'un noyau du solénoïde est compris entre 1 mm et 500 mm.

5. Appareil d'impression tridimensionnelle (1) pour la fabrication d'une pièce composite assistée par un champ magnétique homogène B̅, l'appareil d'impression tridimensionnelle (1) comprenant :
- le dispositif magnétique (11) selon l'une des revendications précédentes, le dispositif magnétique (11) générant le champ magnétique B̅ ajustable à la fois en intensité et en direction spatiale tridimensionnelle ;
- une zone de dépôt (121) adaptée pour recevoir un matériau précurseur, la zone de dépôt (121) étant située dans le plan XY du repère cartésien au sein de la zone spécifique (115) située dans le noyau du solénoïde (113) dans lequel le champ magnétique homogène B̅ est appliqué.

6. Appareil d'impression tridimensionnelle (1) selon la revendication précédente comprenant une plateforme de support (12) comprenant un premier moteur pas à pas (12b) et un deuxième moteur pas à pas (12b'), de sorte qu'une rotation des réseaux de cylindres Halbach intérieurs (111) et extérieurs (112) est contrôlée respectivement par le premier (12b) et le deuxième (12b') moteur.

7. Appareil d'impression tridimensionnelle (1) selon l'une des revendications 5 à 6 dans lequel la zone de dépôt (121) est une cuve, une lame de microscope ou une plateforme de construction.

8. Appareil d'impression tridimensionnelle (1) selon l'une des revendications 5 à 7 comprenant un matériau précurseur disposé dans la zone de dépôt (121).

9. Appareil d'impression tridimensionnelle (1) selon l'une des revendications 5 à 8 comprenant une source de rayonnement (14) configurée pour appliquer un rayonnement (141) sur le matériau précurseur disposé dans la zone de dépôt (121).

10. Appareil d'impression tridimensionnelle selon l'une des revendications 5 à 9, dans lequel l'appareil d'impression tridimensionnelle (1) est un appareil de traitement numérique de la lumière, un appareil d'écriture directe à l'encre ou un appareil de polymérisation à deux photons.

11. Appareil d'impression tridimensionnelle selon l'une des revendications 9 et 10, dans lequel l'appareil d'impression tridimensionnelle est un appareil de traitement de la lumière numérique et le rayonnement est appliqué sur la plateforme de support (12) depuis le dessous du dispositif magnétique (11).

12. Appareil d'impression tridimensionnelle (1) selon l'une des revendications 5 à 11 dans lequel le matériau précurseur comprend une résine polymère incorporant des charges magnéto-réactives.

13. Procédé (200) de fabrication d'une pièce composite assisté par un champ magnétique homogène défini selon les axes X, Y et Z d'un repère cartésien et ajustable en intensité et en direction spatiale tridimensionnelle, le champ magnétique étant généré par un dispositif magnétique comprenant un réseau de cylindres de Halbach concentriques imbriqués, interne (111) et externe (112), partageant un axe de révolution commun aligné sur l'axe Z, chaque réseau de cylindres de Halbach générant un champ magnétique homogène d'intensité égale B₀, les deux réseaux étant montés de manière à tourner conjointement ou en sens angulaire opposé autour de leur axe de révolution commun le dispositif magnétique (11) comprenant également un solénoïde (113) inséré dans le noyau du réseau de cylindres de Halbach interne (111) et dont l'axe de révolution est aligné sur l'axe de révolution commun aux réseaux de cylindres de Halbach interne (111) et externe (112), le solénoïde (113) générant et ajustant un champ magnétique.B̅_̅{̅z̅}̅ de la composante spatiale B _{z} le long de l'axe Z, le champ magnétique généré par le dispositif magnétique (11) étant appliqué à une zone spécifique (115) située à l'intérieur du noyau du solénoïde (113), le procédé (200) comprenant :
(a) alimenter (201) une zone de dépôt (121) avec un matériau précurseur comprenant une résine photopolymérisable et des charges magnétoréactives, la zone de dépôt (121) étant disposée dans le plan XY à l'intérieur de la zone spécifique (115) située dans le cœur du dispositif magnétique (11),
(b) générer (202) un champ magnétique homogène B̅ dans la zone de dépôt (121) par le dispositif magnétique (11), B̅ comprenant des composantes spatiales Bₓ, B_{y} and B_{z} respectivement selon les axes X, Y et Z, et présentant une intensité ∥B̅∥et une direction spatiale tridimensionnelle souhaitées , la génération de B̅ comprenant la génération d'un champ magnétique homogène B̅_̅{̅x̅,̅y̅}̅(α, β)de composantes spatiales Bₓ et B_{y} et d'intensité ∥B̅_̅{̅x̅,̅y̅}̅(α, β)∥ et de direction spatiale réglables dans le plan XY, la génération de B̅_̅{̅x̅,̅y̅}̅comprenant :
∘ faire tourner le cylindre extérieur du réseau de cylindres de Halbach (112) autour de son axe de révolution d'un angle α par rapport à l'axe Y,
∘ faire tourner le cylindre intérieur de Halbach (111) autour de son axe de révolution d'un angle - α par rapport à l'axe Y,
∘ faire tourner conjointement les réseaux de cylindres de Halbach intérieur (111) et extérieur (112) autour de leur même axe de révolution d'un angle β par rapport à l'axe Y pour faire tourner la direction de B̅_̅{̅x̅,̅y̅}̅(α, β) l'angle β par rapport à l'axe Y, de sorte que la direction spatiale de B̅_̅{̅x̅,̅y̅}̅(α, β) dans le plan XY soit la direction spatiale souhaitée,
la génération de B̅ comprend également la génération d'un champ magnétique homogène B̅_̅{̅z̅}̅ de la composante spatiale B_{z} le long de l'axe Z, la génération B̅_̅{̅z̅}̅ comprenant :
∘ injecter un courant électrique réglable dans le solénoïde (113) de sorte que la direction spatiale du champ magnétique B̅ par rapport au plan XY soit donnée par un azimut l'angle Ψ et que l'intensité souhaitée ∥B̅∥ soient égaux à $\sqrt{{\left‖\vec{{B}_{x , y}}\left(α, β\right)\right‖}^{2} + {\left‖\vec{{B}_{z}}\left(Ψ\right)\right‖}^{2}}$,
(c) orienter (203) les charges magnéto-réactives dans un premier alignement avec le premier champ magnétique B̅;
(d) consolider (204) le matériau précurseur avec les charges magnéto-réactives maintenues dans le premier alignement.

14. Le procédé selon la revendication précédente, dans lequel :
- lorsque la pièce composite est fabriquée, le procédé comprend :
(e) post-traitement (206) de la partie composite,
- Sinon, la méthode comprend :
( f) répéter les étapes (a) à (d) jusqu'à l'obtention de la pièce composite.

15. Le procédé (200) selon l'une des revendications 13 à 14 dans lequel chaque étape de consolidation est réalisée avec une source de rayonnement.

16. Le procédé (200) selon l'une des revendications 13 à 15 dans lequel, à l'étape (d), le matériau précurseur est partiellement ou totalement durci.
